# EUROPÄISCHE PATENTANMELDUNG

(11) **EP 3 760 525 A1**
(43) Veröffentlichungstag der Anmeldung: **06.01.2021**
(21) Anmeldenummer: 20183800.0
(22) Anmeldetag: 02.07.2020
(51) Int. Cl.: B62L 3/06, B60T 13/22

(54) **BREMSSYSTEM MIT FESTSTELLBREMSVORRICHTUNG**

(30) Priorität: 03.07.2019 DE 102019117929
(71) Anmelder: Gustav Magenwirth GmbH & Co. KG, 72574 Bad Urach (DE)
(72) Erfinder: Ruopp, Michael, 89180 Berghülen (DE); Wechsler, Axel, 71067 Sindelfingen (DE); Neutsch, Christian, 72764 Reutlingen (DE); Rösing, Philipp, 73765 Neuhausen (DE)
(74) Vertreter: Hoeger, Stellrecht & Partner Patentanwälte mbB

(57) **Zusammenfassung**

Es wird ein Bremssystem für ein Fahrzeug, insbesondere ein Leichtgewichtfahrzeug, insbesondere ein Fahrrad, umfassend eine Bremsvorrichtung, eine mechanische Beaufschlagungsvorrichtung und eine hydraulische Beaufschlagungsvorrichtung vorgeschlagen, wobei die mechanische Beaufschlagungsvorrichtung und die Bremsvorrichtung eine Feststellbremsvorrichtung bilden und die hydraulische Beaufschlagungsvorrichtung eine hydraulisch betätigbare Lösevorrichtung für die Feststellbremsvorrichtung ausbildet.

## Beschreibung

Die Erfindung betrifft ein Bremssystem für ein Fahrzeug, insbesondere ein Bremssystem für ein Leichtgewichtfahrzeug, welches insbesondere durch einen Motor, insbesondere einen E-Motor und/oder zumindest auch mittels Muskelkraft eines Fahrers desselben antreibbar ist, wie beispielsweise ein Fahrrad und/oder ein Pedelec und/oder ein E-Bike. Insbesondere ist das Bremssystem für ein leichtgewichtiges Lastenfahrzeug, beispielsweise also für ein Lastenfahrrad und/oder ein Lastenpedelec und/oder ein Lasten-E-Fahrzeug, mit oder ohne Pedale, vorgesehen.

Die der Erfindung zugrundeliegende Aufgabe besteht darin, ein solches Bremssystem zu verbessern, insbesondere eine erhöhte Sicherheit mittels des verbesserten Bremssystems für das Fahrzeug bereitzustellen.

Erfindungsgemäß wird diese Aufgabe durch ein Bremssystem der eingangs genannten Art dadurch gelöst, dass dieses Bremssystem eine Bremsvorrichtung, eine mechanische Beaufschlagungsvorrichtung und eine hydraulische Beaufschlagungsvorrichtung umfasst, wobei die mechanische Beaufschlagungsvorrichtung und die Bremsvorrichtung eine Feststellbremsvorrichtung bilden und die hydraulische Beaufschlagungsvorrichtung eine hydraulisch betätigbare Lösevorrichtung für die Feststellbremsvorrichtung ausbildet.

Somit ist also vorgesehen, dass das Bremssystem eine Feststellbremsvorrichtung umfasst, die eine mechanische Beaufschlagungsvorrichtung für deren Bremsvorrichtung und eine hydraulisch betätigbare Lösevorrichtung aufweist.

Ein Vorteil dieser Lösung ist beispielsweise darin zu sehen, dass durch die Feststellbremsvorrichtung das Bremssystem verbessert ist und insbesondere erhöhten Sicherheitsanforderungen, die beispielsweise von Fahrern des Fahrzeugs gestellt werden, entspricht, dadurch dass mittels der Feststellbremsvorrichtung ein abgestelltes Fahrzeug beispielsweise vor einem ungewollten Wegrollen gesichert werden kann. Dabei ist es besonders günstig, dass die Bremsvorrichtung der Feststellbremsvorrichtung durch die mechanische Beaufschlagungsvorrichtung beaufschlagt wird, da die mechanische Beaufschlagung eine zuverlässige und störunanfällige Beaufschlagungsweise bietet.

Insbesondere ist ein Vorteil dieser Lösung darin zu sehen, dass die Lösevorrichtung der Feststellbremsvorrichtung durch die hydraulische Beaufschlagungsvorrichtung hydraulisch betätigbar ist und somit die Feststellbremsvorrichtung in einfacher Weise gelöst werden kann und in besonders vorteilhafter Weise mittels bekannter Hydrauliksysteme kombinierbar und/oder ausgestaltbar ist.

Insbesondere ist vorgesehen, dass das Bremssystem zumindest einen Bremszustand aufweist, in welchem die Feststellbremsvorrichtung bremswirksam ist, also insbesondere deren Bremsvorrichtung bremsend auf das Fahrzeug, insbesondere ein Rad desselben, einwirkt. Vorzugsweise ist dabei unter der bremswirksamen Einwirkung bei der Feststellbremsvorrichtung zu verstehen, dass diese eine zur Fortbewegung des Fahrzeugs notwendige Rotationsbewegung des Rads desselben im Wesentlichen unterbindet. Somit ist also insbesondere vorgesehen, dass die Feststellbremsvorrichtung in den Bremszustand versetzt wird, wenn das Fahrzeug in einem Stillstand ist, insbesondere abgestellt ist, um dabei eine Beschleunigung auf eine Geschwindigkeit ungleich größer Null des Fahrzeugs zu unterbinden.

Vorzugsweise ist somit der Bremszustand vorgesehen, um ein Verharren des Fahrzeugs in einem Stillstand zu bewirken.

Außerdem ist insbesondere vorgesehen, dass das Bremssystem mindestens einen Lösezustand aufweist, in welchem die Feststellbremsvorrichtung inaktiv ist. Dabei ist unter einer inaktiven Feststellbremsvorrichtung insbesondere zu verstehen, dass die Feststellbremsvorrichtung nicht bremsend auf das Fahrzeug, insbesondere dessen Rad, einwirkt, sondern im Wesentlichen eine zur Fortbewegung des Fahrzeugs notwendige Rotationsbewegung des Rads zulässt.

Dabei ist vorteilhafterweise vorgesehen, dass die mechanische Beaufschlagungsvorrichtung ausgebildet ist und relativ zu der Bremsvorrichtung angeordnet ist, dass eine Beaufschlagung durch die mechanische Beaufschlagungsvorrichtung die Bremsvorrichtung in den Bremszustand versetzt. Insbesondere wird also somit die zuverlässige mechanische Beaufschlagungsweise mittels der mechanischen Beaufschlagungsvorrichtung verwendet, um die Bremsvorrichtung in den Bremszustand zu versetzen.

Vorzugsweise ist vorgesehen, dass die hydraulische Beaufschlagungsvorrichtung ausgebildet ist und relativ zu der Bremsvorrichtung angeordnet ist, dass eine Beaufschlagung durch die hydraulische Beaufschlagungsvorrichtung die Bremsvorrichtung in den Lösezustand versetzt. Insbesondere ist somit also vorgesehen, dass wenn die Bremsvorrichtung durch die hydraulische Beaufschlagungsvorrichtung beaufschlagt wird, die Bremsvorrichtung in den Lösezustand versetzt wird und damit beispielsweise die günstigen Eigenschaften hinsichtlich der Handhabung einer hydraulischen Betätigung für das Lösen der Bremsvorrichtung ausgenutzt werden.

Hinsichtlich der Ausgestaltung der Bremsvorrichtung wurden bislang keine näheren Angaben gemacht.

Günstig ist es, wenn die Bremsvorrichtung zwei Bremsbackeneinheiten umfasst. Insbesondere sind die zwei Bremsbackeneinheiten, insbesondere Bremsbeläge derselben, relativ zueinander beweglich angeordnet. Damit lässt sich insbesondere eine konstruktiv einfache Bremsvorrichtung, insbesondere als Scheibenbremse, realisieren.

Dabei ist insbesondere vorgesehen, dass die beiden Bremsbackeneinheiten in dem Bremszustand bremswirksam wirken. Vorzugsweise ist vorgesehen, dass die Bremsvorrichtung auch einen Bremsring umfasst, welcher an einem Rad des Fahrzeugs, insbesondere an einer Nabe des Rads, anordenbar ist und/oder angeordnet ist. Vorzugsweise ist dabei vorgesehen, dass in dem Bremszustand die beiden Bremsbackeneinheiten mit dem Bremsring bremswirksam zusammenwirken und insbesondere eine Relativbewegung des Bremsrings relativ zu den Bremsbackeneinheiten im Wesentlichen unterbunden ist. Insbesondere wird der Bremsring in dem Bremszustand von den beiden Bremsbackeneinheiten beaufschlagt, beispielsweise zwischen diesen eingepresst.

Insbesondere ist vorgesehen, dass zwischen den zwei Bremsbackeneinheiten diese einen Bremsaufnahmeraum definieren. Vorzugsweise ist dabei der Bremsaufnahmeraum zur Aufnahme zumindest eines Abschnitts des Bremsrings vorgesehen. Insbesondere ist der Bremsaufnahmeraum in dem Bremszustand kleiner als in dem Lösezustand. Somit ist also günstiger Weise vorgesehen, dass der Bremsring mit einem Abschnitt durch den Bremsaufnahmeraum verlaufend anordenbar ist. Insbesondere wird im Wesentlichen ein freies Rotieren des Bremsrings in dem Lösezustand durch die Bremsbackeneinheiten durch den groß genug ausgebildeten Bremsaufnahmeraum ermöglicht und in dem Bremszustand durch die Verkleinerung des Bremsaufnahmeraums unterbunden. Die Unterbindung der Rotation des Bremsrings erfolgt insbesondere dadurch, dass die zwei Bremsbackeneinheiten auf den in dem Bremsaufnahmeraum angeordneten Abschnitt des Bremsrings bremsend einwirken und insbesondere diesen Abschnitt in dem Bremsaufnahmeraum festhalten, so dass im Wesentlichen ein Verharren des Bremsrings und damit ein Verharren des Rads im Wesentlichen erzwungen wird.

Prinzipiell ist es möglich, dass die Bremsvorrichtung in unterschiedlichster Weise von einem Zustand in einen anderen Zustand versetzbar ist.

Beispielsweise ist bei einigen Ausführungsformen vorgesehen, dass die Bremsvorrichtung mittels Seilzügen in einen anderen Zustand versetzbar ist.

Bei besonders bevorzugten Ausführungsformen ist vorgesehen, dass das Bremssystem, insbesondere die Bremsvorrichtung, zumindest einen Beaufschlagungskolben umfasst. Dabei ist insbesondere der Beaufschlagungskolben vorgesehen, beispielsweise durch eine Bewegung desselben, um die Bremsvorrichtung in einen anderen Zustand zu versetzen. Besonders günstig ist es dabei, wenn der Beaufschlagungskolben bei einer Beaufschlagung desselben die Bremsvorrichtung in einen anderen Zustand versetzt. Vorzugsweise ist vorgesehen, dass der Beaufschlagungskolben ausgebildet und angeordnet ist um in Abhängigkeit einer Orientierung einer, insbesondere entgegengesetzten, Beaufschlagungsrichtung die Bremsvorrichtung in den mindestens einen Bremszustand und/oder in den mindestens einen Lösezustand zu versetzen.

Insbesondere wird mittels des Beaufschlagungskolbens eine konstruktiv einfache und robuste Lösung bereitgestellt, um die Bremsvorrichtung in einen anderen Zustand zu versetzen.

Beispielsweise könnte der Beaufschlagungskolben im Wesentlichen frei angeordnet auf die Bremsvorrichtung, insbesondere auf die Bremsbackeneinheiten einwirken.

Vorzugsweise ist vorgesehen, dass die Bremsvorrichtung ein Gehäuse umfasst. Insbesondere ist das Gehäuse vorgesehen, um darin den Beaufschlagungskolben und weitere Teile der Bremsvorrichtung anzuordnen. Somit werden insbesondere diese Teile vor Verschmutzung geschützt und beispielsweise bietet das Gehäuse auch einen zumindest teilweisen Schutz vor mechanischen äußeren Einwirkungen, welche Schäden an den Teilen der Bremsvorrichtung verursachen könnten.

Insbesondere umfasst das Gehäuse einen Kolbenführungsraum, in welchem der Beaufschlagungskolben angeordnet ist.

Besonders günstig ist es, wenn der Beaufschlagungskolben in einer Beaufschlagungsrichtung linear beweglich relativ zu dem Gehäuse in diesem angeordnet ist. Beispielsweise ist der Beaufschlagungskolben in dem Gehäuse linear geführt gelagert angeordnet.

Besonders günstig ist es, wenn der Kolbenführungsraum Kolbenführungsflächen aufweist und der Beaufschlagungskolben entlang der Kolbenführungsflächen und geführt von diesen beweglich in dem Gehäuse angeordnet ist. Beispielsweise umfasst der Beaufschlagungskolben ein Führungsteil, welches mit Führungsaußenflächen an den Kolbenführungsflächen anliegt. Insbesondere gleiten durch die lineare Lagerung des Beaufschlagungskolbens bei einer Linearbewegung desselben die Kolbenführungsflächen und die Führungsaußenflächen aneinander. Durch die Führung entlang der Kolbenführungsflächen wird insbesondere eine besonders günstige Lagerung und Führung des Beaufschlagungskolbens in einer linearen Richtung ermöglicht.

Beispielsweise ist vorgesehen, dass der Beaufschlagungskolben in einem Fahrwegbereich von zumindest 1 mm beweglich, insbesondere linear beweglich, angeordnet ist. Insbesondere beträgt ein maximaler Fahrweg, in welchem der Kolben beweglich angeordnet, insbesondere beweglich gelagert ist, höchstens 10 mm, insbesondere höchstens 5 mm. Insbesondere sind diese Abmessungen besonders günstig für Leichtgewichtfahrzeuge und bei derartig dimensionierten Fahrwegen können die notwendigen Beaufschlagungskräfte bereitgestellt werden und andererseits ist eine einfache Handhabung insbesondere durch den Fahrer des Leichtgewichtfahrzeugs ermöglicht, da nicht zu große Hubwege, beispielsweise bei einer Gebereinheit, zu bewältigen sind.

Vorzugsweise ist vorgesehen, dass zumindest eine der Bremsbackeneinheiten beaufschlagungswirksam an dem Beaufschlagungskolben gekoppelt ist. Beispielsweise wirkt somit durch die Kopplung bei einer Beaufschlagung der Beaufschlagungskolben auf die zumindest eine Bremsbackeneinheit, so dass diese vorzugsweise mit dem Bremsring bremswirksam zusammenwirkt. Insbesondere ist vorgesehen, dass zumindest in dem Bremszustand zumindest eine der Bremsbackeneinheiten von dem Beaufschlagungskolben beaufschlagt wird.

Bei einigen Ausführungsformen ist vorgesehen, dass die Kopplung zwischen dem Beaufschlagungskolben und der mindestens einen Bremsbackeneinheit über eine Kopplungseinrichtung erfolgt. Beispielsweise kann ein Vorteil hiervon sein, dass mittels der Kopplungseinrichtung das Einwirken des Beaufschlagungskolbens auf die Bremsbackeneinheit in gewünschter Weise verändert werden kann, beispielsweise eine Kraftregulierung und/oder Kraftverstärkung erfolgen kann.

Bei anderen besonders günstigen Ausführungsformen ist vorgesehen, dass ein Bremsbelag einer Bremsbackeneinheit an dem Beaufschlagungskolben angeordnet ist. Durch diese direkte Anordnung wird insbesondere die beaufschlagungswirksame Kopplung in konstruktiv einfacher Weise realisiert und insbesondere ist durch die direkte Anordnung ein Einwirken des Beaufschlagungskolbens auf die Bremsbackeneinheit weniger störanfällig. Vorzugsweise ist dabei vorgesehen, dass der Bremsbelag an einer Frontseite des Beaufschlagungskolbens angeordnet ist.

Beispielsweise ist der Bremsbelag dabei an den Beaufschlagungskolben angeklebt. Bei anderen Ausführungsformen ist vorgesehen, dass der Bremsbelag an den Beaufschlagungskolben angeschraubt ist.

Bei besonders bevorzugten Ausführungsformen ist vorgesehen, dass der Bremsbelag magnetisch an dem Beaufschlagungskolben angeordnet ist, beispielsweise magnetisch an diesem gehalten wird.

Besonders günstig ist es, wenn das Gehäuse einen Durchbruch aufweist, durch welchen hindurch der Beaufschlagungskolben die zumindest eine Bremsbackeneinheit beaufschlagt. Insbesondere öffnet sich der Durchbruch zum einen in den Kolbenführungsraum und zum anderen zu einer Außenseite des Gehäuses und ist beispielsweise als eine Öffnung in einer den Kolbenführungsraum begrenzenden Gehäusewand ausgebildet. Günstig daran ist, dass der Beaufschlagungskolben beweglich in dem Gehäuse und von diesem geschützt angeordnet werden kann und durch den Durchbruch die außenseitig angeordnete Bremsbackeneinheit beaufschlagen kann.

Besonders vorteilhaft ist es, wenn der Beaufschlagungskolben zumindest mit einem Beaufschlagungsteil durch den Durchbruch des Gehäuses hindurchgreift und aus dem Gehäuse herausragt und dabei insbesondere mit dem aus dem Durchbruch herausragenden Teil die zumindest eine Bremsbackeneinheit beaufschlagt.

Bei bevorzugten Ausführungsformen ist ferner vorgesehen, dass in dem Durchbruch eine Dichtung zur Abdichtung des Kolbenführungsraums angeordnet ist. Somit wird vorzugsweise der Kolbenführungsraum zur Außenseite hin abgedichtet, um ein Entweichen von Hydraulikmedium aus dem Kolbenführungsraum zu verhindern und/oder ein Eindringen von Feuchtigkeit in den Kolbenführungsraum zumindest reduziert wird.

Bei unterschiedlichen Ausführungsformen sind verschiedene Anordnungen des Beaufschlagungskolbens und der Bremsbackeneinheiten vorgesehen.

Beispielsweise ist bei einigen Ausführungsformen eine Umlenkvorrichtung vorgesehen, welche eine Beaufschlagung des Beaufschlagungskolbens in eine Beaufschlagungsrichtung umlenkt auf die zumindest eine zu beaufschlagende Bremsbackeneinheit, welche beispielsweise versetzt zu dem Beaufschlagungskolben angeordnet ist.

Bei besonders bevorzugten Ausführungsformen sind der Beaufschlagungskolben und die zwei Bremsbackeneinheiten im Wesentlichen entlang einer Beaufschlagungsachse angeordnet. Insbesondere entspricht die axiale Richtung der Beaufschlagungsachse der Beaufschlagungsrichtung des Beaufschlagungskolbens und der Beaufschlagungskolben ist in dieser axialen Richtung beweglich gelagert. Damit wird insbesondere eine besonders effektive Beaufschlagung der zumindest einen Bremsbackeneinheit oder der zwei Bremsbackeneinheiten ermöglicht und vorzugsweise ist eine konstruktiv einfache und damit auch störunanfälligere Ausbildung ermöglicht. Insbesondere sind dabei die Bremsbeläge sich zumindest näherungsweise senkrecht zu der Beaufschlagungsachse erstreckend ausgebildet und vorzugsweise verlaufen Bremsflächen derselben zumindest näherungsweise senkrecht zu der Beaufschlagungsachse.

Hinsichtlich der detaillierten Ausbildung des Beaufschlagungskolbens wurden bislang keine näheren Angaben gemacht.

Beispielsweise ist bei einigen Ausführungsformen der Beaufschlagungskolben eine Einheit aus mehreren Teilen, insbesondere dem Beaufschlagungsteil und dem Führungsteil, welche zur Beaufschlagung aneinander gekoppelt sind.

Besonders vorteilhaft ist es jedoch, wenn der Beaufschlagungskolben im Wesentlichen als einstückiger Körper ausgebildet ist, wodurch insbesondere eine robuste Ausbildung desselben ermöglicht wird. Insbesondere sind dabei das Beaufschlagungsteil und das Führungsteil Teile des im Wesentlichen einstückigen Körpers. Insbesondere ist der einstückige Beaufschlagungskolben länglich entlang der Beaufschlagungsachse ausgebildet und das Beaufschlagungsteil und das Führungsteil sind einzelne Längsabschnitte desselben.

Beispielsweise ist zwischen dem Beaufschlagungsteil und dem Führungsteil ein diese Teile verbindendes Verbindungsteil angeordnet. Vorzugsweise ist das Verbindungsteil bei dem im Wesentlichen einstückigen Beaufschlagungskolben ein sich zwischen dem Führungsteil und dem Beaufschlagungsteil erstreckender Längsabschnitt des einstückigen Körpers.

Insbesondere ist eine radiale Ausdehnung des Beaufschlagungsteils kleiner als eine radiale Ausdehnung des Führungsteils. Dies ist insbesondere bei dem einstückigen Beaufschlagungskolben vorgesehen, bei welchem vorzugsweise einzelne Längsabschnitte eine unterschiedliche radiale Ausdehnung aufweisen. Beispielsweise wird dadurch ermöglicht, dass die durch die sich verändernde radiale Ausdehnung entstehenden Schrägflächen und/oder Stufen des Beaufschlagungskolbens Funktionen der Bremsvorrichtung erfüllen können. Auch für eine verbesserte Führung des Beaufschlagungskolbens kann ein radial größerer Führungsteil vorteilhaft sein.

Insbesondere beträgt ein Durchmesser, welcher insbesondere zumindest näherungsweise senkrecht zu der Beaufschlagungsachse gemessen wird, des beispielsweise einstückig ausgebildeten Beaufschlagungskolbens, mindestens 6 mm, vorzugsweise mindestens 10 mm. Vorzugsweise ist vorgesehen, dass der Durchmesser höchstens 70 mm, insbesondere höchstens 50 mm beträgt. Beispielsweise ist bei einigen Ausführungsformen vorgesehen, dass der Durchmesser des Beaufschlagungskolbens zumindest abschnittsweise 20 mm ± 5 mm beträgt und bei anderen Ausführungsformen ist vorgesehen, dass dieser 30 mm ± 5 mm beträgt. Insbesondere sind dies günstige Abmessungen für Beaufschlagungsvorrichtungen für Leichtgewichtfahrzeuge, wobei mit diesen Abmessungen benötigten Beaufschlagungskräfte übertragen werden können und andererseits der Kolben kein zu großes Gewicht für das Leichtgewichtfahrzeug aufweist und nicht zu schwerfällig ist, so dass insbesondere die Betätigung durch einen Fahrer ermöglicht wird.

Hinsichtlich unterschiedlicher Stellungen des Beaufschlagungskolbens wurden bislang keine näheren Angaben gemacht.

Insbesondere weist der Beaufschlagungskolben in dem Lösezustand mehrere Lösestellungen auf und weist beispielsweise auch in dem Bremszustand mehrere Bremsstellungen auf.

Insbesondere ist der Beaufschlagungskolben in dem Lösezustand bis zu einer Löseendstellung und/oder in dem Bremszustand bis zu einer Bremsendstellung beweglich angeordnet und ist insbesondere zwischen der Löseendstellung und der Bremsendstellung in verschiedene Stellungen versetzbar, wobei die verschiedenen Stellungen insbesondere teilweise zu dem Lösezustand und teilweise zu dem Bremszustand korrespondieren.

Vorzugsweise umfasst der Beaufschlagungskolben einen vorderen axialen Anschlag für die Bremsendstellung, so dass insbesondere der Beaufschlagungskolben bis zu der Bremsendstellung beweglich angeordnet ist und in dieser der vordere axiale Anschlag mit einem Gegenstück zusammenwirkt. Das Gegenstück könnte ein in dem Kolbenführungsraum separat angeordnetes Teil sein, besonders günstig ist es jedoch, wenn in der Bremsendstellung der vordere axiale Anschlag mit einer Gehäusewand des Gehäuses als Gegenstück zusammenwirkt und insbesondere vorgesehen ist, dass diese Gehäusewand den Durchbruch aufweist.

Insbesondere ist vorgesehen, dass ein zwischen dem Führungsteil und dem Beaufschlagungsteil angeordnetes Verbindungsteil des Beaufschlagungskolbens mit dem vorderen axialen Anschlag versehen ist.

Bei einigen Ausführungsformen ist vorgesehen, dass eine Stufe des insbesondere einstückigen Beaufschlagungskolbens den Anschlag ausbildet und insbesondere das Verbindungsteil die Stufe aufweist.

Bei günstigen Ausführungsformen ist vorgesehen, dass der Beaufschlagungskolben einen hinteren axialen Anschlag für die Löseendstellung umfasst, so dass insbesondere in dem Lösezustand der Beaufschlagungskolben bis zur Löseendstellung beweglich ist und in dieser der hintere axiale Anschlag mit einem Gegenstück zusammenwirkt. Vorzugsweise ist dabei vorgesehen, dass der hintere axiale Anschlag an einer dem Beaufschlagungsteil gegenüberliegenden Seite des Beaufschlagungskolbens angeordnet ist. Auch hier könnte das Gegenstück ein separates Teil sein, wobei es vorteilhaft ist, wenn der hintere axiale Anschlag in der Löseendstellung mit einem Teil des Gehäuses als Gegenstück zusammenwirkt.

Hinsichtlich weiterer Ausbildungen der Bremsvorrichtung wurden bislang keine näheren Angaben gemacht.

Bei besonders vorteilhaften Ausführungsformen ist vorgesehen, dass die Bremsvorrichtung eine Verschleißnachstelleinrichtung für die zwei Bremsbackeneinheiten umfasst. Insbesondere wird mit dieser ermöglicht, dass bei einem Verschleiß der Bremsbeläge der Bremsbackeneinheiten diese nachgestellt werden können und so die Bremsvorrichtung einen wohl definierten und voreingestellten Bremszustand aufweist. Beispielsweise umfasst die Verschleißnachstelleinrichtung eine Stellschraube zum nachjustieren zumindest eines Bremsbelages.

Hinsichtlich der mechanischen Beaufschlagungsvorrichtung wurden bislang keine näheren Angaben gemacht.

Besonders günstig ist es, wenn die mechanische Beaufschlagungsvorrichtung die Bremsvorrichtung linear in einer Beaufschlagungsrichtung beaufschlagt, wobei insbesondere die Beaufschlagungsrichtung zumindest näherungsweise der axialen Richtung der Beaufschlagungsachse entspricht.

Bei besonders günstigen Ausführungsformen umfasst die Beaufschlagungsvorrichtung ein Federelement für die mechanische Beaufschlagung, so dass die Beaufschlagungsvorrichtung in konstruktiv einfacher Weise realisiert wird.

Beispielsweise ist die Beaufschlagungsvorrichtung separat von der Bremsvorrichtung angeordnet.

Bei besonders bevorzugten Ausführungsformen ist die mechanische Beaufschlagungsvorrichtung, insbesondere deren Federelement, in dem Gehäuse der Bremsvorrichtung und vorzugsweise in dem Kolbenführungsraum angeordnet. Damit wird eine kompakte Bauweise ermöglicht und insbesondere eine direkte Beaufschlagung des Beaufschlagungskolbens durch die mechanische Beaufschlagungsvorrichtung realisierbar.

Insbesondere ist vorgesehen, dass die mechanische Beaufschlagungsvorrichtung, insbesondere deren Federelement, sich an dem Beaufschlagungskolben abstützend angeordnet ist.

Insbesondere ist vorgesehen, dass der Beaufschlagungskolben eine erste Beaufschlagungsfläche für die mechanische Beaufschlagungsvorrichtung umfasst, an welcher insbesondere die mechanische Beaufschlagungsvorrichtung, vorzugsweise deren Federelement, sich abstützend angeordnet ist und an dieser Beaufschlagungsfläche den Beaufschlagungskolben beaufschlagt. Vorzugsweise ist diese Beaufschlagungsfläche an einer Stufe des Beaufschlagungskolbens ausgebildet. Besonders günstig ist es dabei, wenn die erste Beaufschlagungsfläche an einer dem Beaufschlagungsteil gegenüberliegenden Seite des Beaufschlagungskolbens angeordnet ist. Beispielsweise ist die Beaufschlagungsfläche an dem Führungsteil vorgesehen.

Besonders günstig ist es, wenn die erste Beaufschlagungsfläche zumindest näherungsweise senkrecht zu der Beaufschlagungsachse verlaufend ausgebildet ist.

Vorteilhaft ist es, wenn die mechanische Beaufschlagungsvorrichtung, insbesondere deren Federelement, sich an dem Gehäuse abstützend ausgebildet ist, beispielsweise sich an einer den Kolbenführungsraum begrenzenden Gehäusewand abstützend ausgebildet ist. Insbesondere ist dabei vorgesehen, dass eine Abstützfläche des Gehäuses, an welcher sich die mechanische Beaufschlagungsvorrichtung abstützt, an einem dem Durchbruch gegenüberliegenden axialen Ende des Kolbenführungsraums angeordnet ist. Somit wird beispielsweise eine besonders effektive Beaufschlagung durch die mechanische Beaufschlagungsvorrichtung ermöglicht.

Besonders günstig ist es, wenn die mechanische Beaufschlagungsvorrichtung, insbesondere deren Federelement, unter Vorspannung die Bremsvorrichtung beaufschlagend montiert ist, insbesondere unter Vorspannung in den Kolbenführungsraum montiert ist. Insbesondere wird hierdurch ermöglicht, dass durch die Vorspannung die Bremsvorrichtung durch die mechanische Beaufschlagungsvorrichtung stets beaufschlagt wird und somit diese zusammen die Feststellbremsvorrichtung in besonders günstiger Weise dahingehend ausbilden, dass ohne ein Lösen der Feststellbremsvorrichtung diese bremswirksam aktiv ist und somit die hohen Sicherheitsanforderungen bezüglich der Aktivierung der Feststellbremsvorrichtung erfüllt werden.

Bei einigen bevorzugten Ausführungsformen ist vorgesehen, dass das Federelement einen Teil des Beaufschlagungskolbens umgreift. Beispielsweise umgreift das Federelement einen den hinteren Anschlag aufweisenden Teil des Beaufschlagungskolbens. Insbesondere wird dadurch eine besonders bauraumsparende Ausführungsform bereitgestellt, da in einem Bereich, insbesondere des Kolbenführungsraums, radial inwärts das Teil des Beaufschlagungskolbens und außerhalb von diesem das Federelement angeordnet sind und somit der Bauraum effektiv ausgenutzt wird.

Hinsichtlich der Ausbildung der hydraulischen Beaufschlagungsvorrichtung wurden bislang keine näheren Angaben gemacht.

Insbesondere ist vorgesehen, dass die hydraulische Beaufschlagungsvorrichtung eine hydraulische Druckkammer aufweist, welche insbesondere für druckbeaufschlagtes Hydraulikmedium vorgesehen ist, welches in der hydraulischen Druckkammer eine Beaufschlagung der Bremsvorrichtung, insbesondere des Beaufschlagungskolbens, bewirkt. Besonders vorteilhaft ist dabei, wenn der Kolbenführungsraum die hydraulische Druckkammer umfasst, so dass eine besonders effektive Beaufschlagung des Beaufschlagungskolbens erfolgen kann.

Vorzugsweise ist dabei vorgesehen, dass die hydraulische Druckkammer von dem Beaufschlagungskolben und dem Gehäuse begrenzt wird, wobei insbesondere die die hydraulische Druckkammer begrenzenden Teile des Gehäuses auch den Kolbenführungsraum begrenzen. Damit wird eine direkte Beaufschlagung des Beaufschlagungskolbens durch Hydraulikmedium in der hydraulischen Druckkammer ermöglicht.

Insbesondere ist vorgesehen, dass die hydraulische Druckkammer größenvariabel ausgebildet ist, dass also ein Volumen der hydraulischen Drucckammer, insbesondere in Abhängigkeit von einer Stellung des Beaufschlagungskolbens, ein unterschiedliches Volumen aufweist. Vorzugsweise ist dabei vorgesehen, dass die hydraulische Druckkammer längenvariabel ausgebildet ist und zwar insbesondere in zur Beaufschlagungsachse axialer Richtung. Insbesondere ist die hydraulische Druckkammer zwischen einer zweiten Beaufschlagungsfläche des Beaufschlagungskolbens und einer dieser Beaufschlagungsfläche gegenüberliegenden Fläche des Gehäuses längenvariabel ausgebildet.

Besonders günstig ist es, wenn das Volumen der hydraulischen Druckkammer in dem Bremszustand kleiner ist als in dem Lösezustand. Insbesondere wird hierdurch ermöglicht, dass durch Zuführen von druckbeaufschlagtem Hydraulikmedium in die hydraulische Druckkammer die Bremsvorrichtung von dem Bremszustand in den Lösezustand versetzt wird.

Bei einigen besonders vorteilhaften Ausführungsformen ist vorgesehen, dass die hydraulische Druckkammer entlang eines Abschnitts der zur Beaufschlagungsachse axialen Erstreckung des Beaufschlagungskolbens sich erstreckt. Hierdurch wird beispielsweise eine bauraumsparende, kompakte Ausbildung ermöglicht. Vorzugsweise sind an den Beaufschlagungskolben Dichtungen zur Abdichtung der hydraulischen Druckkammer angeordnet und insbesondere erstreckt sich die hydraulische Druckkammer zwischen zwei axial beabstandet an den Beaufschlagungskolben angeordneten Dichtungen.

Bei einigen bevorzugten Ausführungsformen ist vorgesehen, dass zumindest eine die hydraulische Druckkammer begrenzende Dichtung an einer Führungsaußenfläche des Beaufschlagungskolbens angeordnet ist. Diese ist besonders günstig, wenn das Führungsteil eine größere radiale Ausdehnung als andere Teile des Beaufschlagungskolbens aufweist, so dass vorzugsweise die Dichtung in einem Bereich der größten radialen Ausdehnung angeordnet ist und die Druckkammer im Bereich der geringeren radialen Ausdehnung vorgesehen werden kann. Alternativ oder ergänzend ist die Dichtung an den Führungsaußenflächen vorteilhaft, wenn beidseits des Führungsteils die Beaufschlagungsflächen für die hydraulische und mechanische Beaufschlagungsvorrichtungen vorgesehen sind, so dass die Dichtung das Hydrauliksystem der hydraulischen Beaufschlagungsvorrichtung gegenüber der Mechanik der mechanischen Beaufschlagungsvorrichtung abdichtet.

Günstig ist es, wenn eine die hydraulische Druckkammer begrenzende Dichtung an einem durch den Durchbruch hindurchgreifenden Teil des Beaufschlagungskolbens angeordnet ist und somit insbesondere in dem und mit dem Durchbruch abdichtend angeordnet ist. Damit ist dann insbesondere die hydraulische Druckkammer gegenüber einer Außenseite des Gehäuses abgedichtet.

Vorzugsweise ist die hydraulische Druckkammer in einem axialen Endbereich des Kolbenführungsraums angeordnet, insbesondere in einem einer Bremsseite des Gehäuses zugewandten axialen Endbereich, wobei an der Bremsseite die Bremsbackeneinheiten angeordnet sind. Beispielsweise begrenzt dabei die den Durchbruch aufweisende Gehäusewand zumindest teilweise die hydraulische Druckkammer. Insbesondere ist somit die Druckkammer zwischen den Bremsbackeneinheiten und einer Beaufschlagungsfläche des Beaufschlagungskolbens angeordnet und kann somit in besonders günstiger Weise den Beaufschlagungskolben in Richtung des Lösezustands beaufschlagen.

Ferner ist bei günstigen Ausführungsformen vorgesehen, dass radiale Seitenbegrenzungsflächen, welche im Wesentlichen eine axiale Fortsetzung der Kolbenführungsflächen in axialer Richtung darstellen und sich insbesondere bis zu einem axialen Ende des Kolbenführungsraums erstrecken in radialer Richtung die hydraulische Druckkammer begrenzen.

Insbesondere ist vorgesehen, dass eine Mündungsöffnung eines Fluidkanals in die hydraulische Druckkammer mündet. Insbesondere ist der Fluidkanal für Hydraulikmedium vorgesehen und Teil eines Hydrauliksystems. Günstig ist dabei, wenn die hydraulische Druckkammer über den Fluidkanal und beispielsweise einen Hydraulikanschluss des Gehäuses fluidführend mit der Gebereinheit verbindbar oder verbunden ist. Insbesondere mündet die Mündungsöffnung in ein der Bremsendstellung korrespondierendes Minimalvolumen der hydraulischen Druckkammer, so dass vorzugsweise die Mündungsöffnung in jeglichen Stellungen des Beaufschlagungskolbens in dem Brems- und Lösezustand, also insbesondere während eines üblichen Betriebsverlaufs, nicht von diesem verschlossen wird und insbesondere stets freigegeben ist um der hydraulischen Druckkammer druckbeaufschlagtes Hydraulikmedium zuführen zu können.

Hierbei ist bei bevorzugten Ausführungsformen vorgesehen, dass die Mündungsöffnung in einem zur Beaufschlagungsachse axialen Endbereich des Kolbenführungsraums angeordnet ist.

Vorzugsweise ist die Mündungsöffnung an einer zur Beaufschlagungsachse radialen Seitenbegrenzungsfläche des Kolbenführungsraums angeordnet, wobei die radiale Seitenbegrenzungsfläche sich insbesondere zwischen der Kolbenführungsfläche und einem axialen Ende des Kolbenführungsraums erstreckt. Bei anderen bevorzugten Ausführungsformen ist vorgesehen, dass die Mündungsöffnung an einer axialen Stirnseite des Kolbenführungsraums angeordnet ist.

Hinsichtlich der weiteren Ausgestaltung der hydraulischen Beaufschlagungsvorrichtung und des Hydrauliksystems wurden bislang keine näheren Angaben gemacht.

Insbesondere ist das Hydrauliksystem der hydraulischen Beaufschlagungsvorrichtung entsprechend der Anwendung für ein Fahrzeug, insbesondere für ein Leichtgewichtfahrzeug, ausgelegt.

Beispielsweise ist das Hydrauliksystem für Drücke von mindestens 50 bar, vorzugsweise von mindestens 70 bar, beispielsweise von mindestens 90 bar und/oder von höchstens 250 bar, insbesondere von höchstens 200 bar, beispielsweise von höchstens 150 bar ausgelegt.

Insbesondere sind die Hydraulikleitungen und/oder Fluidkanäle des Hydrauliksystems entsprechend der Anwendung für ein Fahrzeug, insbesondere ein Leichtgewichtfahrzeug, ausgelegt. Beispielsweise weisen die Hydraulikleitungen und/oder Fluidkanäle einen inneren Durchmesser auf, welcher insbesondere größer als 1 mm, insbesondere größer als 5 mm, ist und/oder höchstens 30 mm, insbesondere höchstens 20 mm beträgt.

Die hydraulische Beaufschlagungsvorrichtung ist insbesondere für die Anwendung bei Fahrzeugen, insbesondere bei Leichtgewichtfahrzeugen, ausgelegt. Beispielsweise ist sie derart ausgelegt, um Beaufschlagungskräfte von mindestens 10 Newton, insbesondere von mindestens 30 Newton, vorzugsweise von mindestens 50 Newton bereitzustellen und/oder ist ausgelegt für Beaufschlagungskräfte von höchstens 150 Newton, insbesondere von höchstens 120 Newton, vorzugsweise von höchstens 100 Newton.

Außerdem wird die der Erfindung zugrundeliegende Aufgabe in einem weiteren Aspekt derselben alternativ oder ergänzend durch ein Bremssystem für ein Fahrzeug, insbesondere ein Leichtgewichtfahrzeug, insbesondere ein Fahrrad, gelöst, welches eine hydraulische Beaufschlagungsvorrichtung für eine Bremsvorrichtung aufweist, wobei die hydraulische Beaufschlagungsvorrichtung eine hydraulische Druckkammer und eine Ventilsteuerung umfasst.

Insbesondere betrifft dieser Aspekt eine vorteilhafte Ausbildung der Ventilsteuerung zur besonders günstigen Steuerung des Hydraulikmediums. Beispielsweise ist die hydraulische Beaufschlagungsvorrichtung mit der Ventilsteuerung gemäß diesem Aspekt der Erfindung bei einem Bremssystem mit einer Feststellbremsvorrichtung wie voranstehend erläutert vorgesehen. Die hydraulische Beaufschlagungsvorrichtung mit der Ventilsteuerung gemäß diesem Aspekt der Erfindung kann aber auch bei anderen Bremssystemen mit Vorteilen verwendet werden, wobei es besonders bevorzugt ist, wenn die Bremsvorrichtung oder die weitere Ausgestaltung des Bremssystems eines oder mehrerer der voranstehend und nachstehend genannten Merkmale und/oder Elemente aufweist.

Vorzugsweise weist die hydraulische Beaufschlagungsvorrichtung, beispielsweise ein Hydrauliksystem derselben eine Gebereinheit zur Bereitstellung von druckbeaufschlagtem Hydraulikmedium auf.

Bei bevorzugten Ausführungsformen ist vorgesehen, dass die Gebereinheit eine handbetätigte Gebereinheit ist.

Bei anderen vorteilhaften Ausführungsformen ist vorgesehen, dass die Gebereinheit eine fußbetätigte Gebereinheit ist.

Derartige fußbetätigte oder handbetätigte Gebereinheiten sind insbesondere für Leichtgewichtfahrzeuge besonders günstig und ermöglichen eine einfache Handhabung durch den Fahrer des Fahrzeugs, insbesondere des Leichtgewichtfahrzeugs.

Vorteilhaft ist es, wenn die Gebereinheit einen Ausgleichsbehälter mit einem Reservoir für Hydraulikmedium umfasst. Insbesondere kann somit in dem Reservoir ein Vorrat an Hydraulikmedium bereitgestellt werden, um beispielsweise geringfügige Verluste von Hydraulikmedium beispielsweise bei undichten Stellen des Hydrauliksystems auszugleichen und/oder um Schwankungen in der Menge des Hydraulikmediums, welches in den an die Gebereinheit angeschlossenen Hydraulikmediumverbrauchern, beispielsweise in der hydraulischen Druckkammer, die beispielsweise durch Verschleiß eines Bremsbelags auftreten können, vorhanden ist, auszugleichen.

Beispielsweise ist die Gebereinheit und/oder die hydraulische Beaufschlagungsvorrichtung derart ausgebildet, dass bereits bei in etwa einem halben Hub der Gebereinheit die Bremsvorrichtung mittels der hydraulischen Beaufschlagungsvorrichtung bereits in ihrem Lösezustand versetzt wird. Bei anderen vorteilhaften Ausführungsformen ist vorgesehen, dass in etwa bis zu ein vollständiger Hub der Gebereinheit oder gegebenenfalls auch mehrere Hübe, erforderlich sind, um die Bremsvorrichtung mittels der hydraulischen Beaufschlagungsvorrichtung in ihren Lösezustand zu versetzen.

Hinsichtlich der Ausgestaltung der Ventilsteuerung wurden bislang keine weiteren Angaben gemacht.

Vorteilhaft ist es, wenn die Ventilsteuerung ein Zuführventil umfasst, welches in einem Öffnungszustand einen Durchfluss von Hydraulikmedium in einer von einem Hydraulikanschluss, an welchen eine Gebereinheit anschließbar und/oder angeschlossen ist, zur hydraulischen Druckkammer orientierten Freigaberichtung freigibt und insbesondere einen Sperrzustand aufweist, in welchem kein Durchfluss von Hydraulikmedium durch das Zuführventil möglich ist. Somit kann beispielsweise in dem Öffnungszustand druckbeaufschlagtes Hydraulikmedium von der Gebereinheit der Druckkammer zugeführt werden, wohingegen in dem Sperrzustand das Zuführventil einen Durchfluss sperrt und damit durch dieses druckbeaufschlagte Hydraulikmedium in der Druckkammer gehalten wird. Dies ist besonders bei der hydraulischen Lösevorrichtung vorteilhaft, da somit durch das Zuführventil druckbeaufschlagtes Hydraulikmedium zugeführt werden kann und beispielsweise mittels des Beaufschlagungskolbens die Bremsvorrichtung in den Lösezustand versetzt werden kann und in dem Sperrzustand das druckbeaufschlagte Hydraulikmedium in der Druckkammer verbleibt und somit die Bremsvorrichtung in dem Lösezustand verharrt.

Insbesondere ist der Hydraulikanschluss an dem Gehäuse der Bremsvorrichtung vorgesehen. Insbesondere ist der Hydraulikanschluss in dem Gehäuse mittels Fluidkanälen mit der hydraulischen Druckkammer verbunden. In einem zusammengebauten Zustand ist an den Hydraulikanschluss die Gebereinheit angeschlossen.

Insbesondere ist vorgesehen, dass das Zuführventil einen Ventilkörper und einen Ventilsitz umfasst, wobei insbesondere der Ventilkörper in dem Öffnungszustand eine von dem Ventilsitz räumlich entfernte Öffnungsstellung einnimmt und in dem Sperrzustand der Ventilkörper und der Ventilsitz fluiddichtend zusammenwirken. Somit ist also in der Öffnungsstellung der Ventilkörper räumlich von dem Ventilsitz entfernt angeordnet und ein Durchfluss von Hydraulikmedium ist freigegeben wohingegen in dem Sperrzustand durch das fluiddichtende Zusammenwirken das Zuführventil einen Durchfluss von Hydraulikmedium sperrt.

Besonders vorteilhaft ist es, wenn der Ventilkörper druckkammerseitig von dem Ventilsitz angeordnet ist. Insbesondere ist somit der Ventilkörper auf einer Seite des Ventilsitz angeordnet, welcher bezüglich der Fluidverbindung der Hydraulikdruckkammer zugewandt ist und dabei ist beispielsweise vorteilhaft, dass beim Bereitstellen von druckbeaufschlagtem Hydraulikmedium über den Hydraulikanschluss dieses den Ventilkörper aus dem Ventilsitz herausdrücken und in die Öffnungsstellung versetzen kann, so dass mit dem Bereitstellen des druckbeaufschlagten Hydraulikmediums auch gleichzeitig das Zuführventil geöffnet wird und so in einfacher Weise das druckbeaufschlagte Hydraulikmedium in die Hydraulikkammer zum Versetzen der Bremsvorrichtung in den Lösezustand gelangt. Insbesondere unterstützt zumindest das druckkammerseitig angeordnete Hydraulikmedium dabei auch die Beaufschlagung des druckkammerseitig angeordneten Ventilkörpers in die Sperrstellung.

Vorzugsweise ist vorgesehen, dass der Ventilsitz eine Dichtung aufweist zur Aufnahme des Ventilkörpers in dessen Sperrstellung. Der Ventilkörper nimmt die Sperrstellung in dem Sperrzustand des Zuführventils ein. Beispielsweise ist die Dichtung ein Dichtring und ist insbesondere eine Ventildurchführung umgebend ausgebildet. Somit wird vorzugsweise eine besonders gute Abdichtung in dem Sperrzustand erreicht. Insbesondere ist die Dichtung druckkammerseitig des Ventilsitzes angeordnet, insbesondere bei einem druckseitig angeordneten Ventilkörper.

Vorzugsweise ist vorgesehen, dass das Zuführventil ein federbeaufschlagtes Ventil ist, wodurch insbesondere der Ventilkörper durch die Federbeaufschlagung in eine Grundstellung beaufschlagt wird. Besonders vorteilhaft ist es, wenn der Ventilkörper in Richtung seiner Sperrstellung federbeaufschlagt ist, so dass insbesondere das Zuführventil als Grundstellung ohne weitere Beaufschlagung in dem Sperrzustand verharrt und somit die hydraulische Druckkammer abdichtet. Beispielsweise ist der Ventilkörper mittels einer Ventilfeder beaufschlagt, welche beispielsweise als Positionshaltefeder derart ausgelegt ist, dass diese den insbesondere druckkammerseitig angeordneten Ventilkörper lediglich in der Nähe des Ventilsitzes hält, um ein Entweichen desselben vom Ventilsitz zu verhindern. Dabei ist insbesondere vorgesehen, dass die Feder derart schwach ausgelegt ist, dass die Beaufschlagung des Ventilkörpers zum Versetzen in dessen Öffnungsstellung und/oder Sperrstellung insbesondere von den Druckunterschieden des Hydraulikmediums, welches druckkammerseitig und hydraulikanschlussseitig des Ventilsitzes ist, bewirkt wird. Ein Vorteil hiervon ist beispielsweise darin zu sehen, dass zum Öffnen des Zuführventils ein Fahrer des Fahrzeugs lediglich das notwendige druckbeaufschlagte Hydraulikmedium bereitstellen muss, aber dabei im Wesentlichen keine zusätzliche Kraft aufwenden muss, um mittels des Hydraulikmediums den Ventilkörper gegen die Beaufschlagung durch die Positionshaltefeder in die Öffnungsstellung zu versetzen. Andererseits ist es günstig, wenn das druckbeaufschlagte Hydraulikmedium in der Druckkammer durch dessen Überdruck selbsttätig das Zuführventil schließt, so dass dieses einen Durchfluss von Hydraulikmedium sperrt und die Bremsvorrichtung durch das druckbeaufschlagte Hydraulikmedium in dessen Lösezustand verharrt.

Bei besonders bevorzugten Ausführungsformen ist vorgesehen, dass das Zuführventil ein hydraulisch betätigtes Ventil ist. Insbesondere ist das Zuführventil derart ausgebildet und ausgelegt, dass dieses durch über den Hydraulikanschluss bereitgestelltes druckbeaufschlagtes Hydraulikmedium in seinen Öffnungszustand versetzt wird. Insbesondere wird das bereitgestellte Hydraulikmedium von der Gebereinheit bereitgestellt. Somit ist insbesondere eine leichte Handhabung des Zuführventils, insbesondere eine gleichzeitige Betätigung desselben bei Bereitstellen von druckbeaufschlagtem Hydraulikmedium, ermöglicht. Insbesondere ist eine Kombination mit einer Federbeaufschlagung wie voranstehend erläutert, besonders günstig.

Bei einer besonders günstigen Ausführungsform umfasst die Ventilsteuerung ein Freigabeventil, welches in einem Freigabezustand einen Durchfluss von Hydraulikmedium aus der hydraulischen Druckkammer freigibt. Insbesondere weist das Freigabeventil auch einen Schließzustand auf, in welchem das Freigabeventil zumindest gegenüber in der hydraulischen Druckkammer vorhandenem Hydraulikmedium fluidabdichtend schließend wirkt. Das Freigabeventil ist besonders günstig für die hydraulische Lösevorrichtung, da durch Versetzen des Freigabeventils in den Freigabezustand druckbeaufschlagtes Hydraulikmedium aus der hydraulischen Druckkammer entweichen kann und dadurch insbesondere durch die Einwirkung der mechanischen Beaufschlagungsvorrichtung die Bremsvorrichtung von dem Lösezustand in den Bremszustand versetzt wird. Außerdem schließt insbesondere das Freigabeventil die hydraulische Druckkammer fluidabdichtend in dem Schließzustand, so dass druckbeaufschlagtes Hydraulikmedium in dem Schließzustand nicht durch das Freigabeventil aus der hydraulischen Druckkammer entweichen kann, und somit insbesondere der Bremskolben in einer Lösestellung und somit die Bremsvorrichtung in dem Lösezustand verharrt.

Besonders günstig ist es, wenn das Freigabeventil einen Schließkörper umfasst, welcher in dem Schließzustand eine Schließstellung einnimmt. In der Schließstellung wirkt der Schließkörper fluidabdichtend und zwar insbesondere mit einer Dichtung zusammen.

Bei bevorzugten Ausführungsformen ist das Freigabeventil ein federbeaufschlagtes Ventil insbesondere ist dabei der Schließkörper in Richtung seiner Schließstellung federbeaufschlagt. Somit verharrt insbesondere das Freigabeventil in seiner Grundposition, welche durch die Federbeaufschlagung vorgegeben ist, also insbesondere in seinem Schließzustand. Beispielsweise ist dies vorteilhaft, da somit ohne eine Betätigung des Freigabeventils dieses schließt und folglich durch die Fluidabdichtung druckbeaufschlagtes Hydraulikmedium in der Druckkammer verharrt und insbesondere dadurch die Bremsvorrichtung in ihrem Lösezustand verharrt.

Weitere Angaben zur Betätigung des Freigabeventils wurden bislang nicht gemacht. Dabei sind bei unterschiedlichen Ausführungsformen unterschiedliche Betätigungsweisen für das Freigabeventil vorgesehen.

Bei einer besonders günstigen Ausführungsform ist vorgesehen, dass das Freigabeventil mittels einer Freigabeeinrichtung in den Freigabezustand versetzbar ist. Beispielsweise ist die Freigabeeinrichtung eine mechanische Freigabeeinrichtung, wirkt also mechanisch auf das Freigabeventil ein, insbesondere um dieses in den Freigabezustand zu versetzen. Dies ist bei der Lösevorrichtung insbesondere günstig, um mittels der Freigabeeinrichtung das Freigabeventil für einen Abfluss von Hydraulikmedium aus der Druckkammer zu ermöglichen, so dass, insbesondere unter verstärkendem Einfluss der mechanischen Beaufschlagungsvorrichtung, die Bremsvorrichtung in den Bremszustand versetzt wird.

Insbesondere ist vorgesehen, dass die Freigabeeinrichtung in einer Betätigungsstellung das Freigabeventil in den Freigabezustand versetzt. Bei besonders günstigen Ausführungsformen ist vorgesehen, dass mittels eines Bowdenzuges die Freigabeeinrichtung in die Betätigungsstellung versetzbar ist. Beispielsweise bei Leichtgewichtfahrzeugen ist dies besonders günstig, so dass ein Fahrer derselben in einfacher Weise mittels der Freigabeeinrichtung das Freigabeventil betätigen kann.

Bei besonders vorteilhaften Ausführungsformen ist vorgesehen, dass die Freigabeeinrichtung federbeaufschlagt ist. Hierdurch wird insbesondere erreicht, dass die Freigabeeinrichtung durch die Federbeaufschlagung in eine gewünschte Grundstellung versetzt ist, solange diese nicht betätigt wird. Vorzugsweise ist vorgesehen, dass durch die Federbeaufschlagung die Freigabeeinrichtung aus der Betätigungsstellung heraus versetzt wird. Dies ist beispielsweise vorteilhaft, damit nur bei einer Betätigung der Freigabeeinrichtung diese auf das Freigabeventil einwirkt.

Insbesondere wirkt die Freigabeeinrichtung in der Grundstellung im Wesentlichen nicht auf das Freigabeventil ein, zumindest wirkt diese nicht derart auf das Freigabeventil ein, dass dieses in den Freigabezustand versetzt würde.

Insbesondere ist vorgesehen, dass die Freigabeeinrichtung ein Aktivierungselement umfasst, mittels welchem insbesondere in der Betätigungsstellung das Freigabeventil in den Freigabezustand versetzbar ist.

Beispielsweise wirkt zumindest in der Betätigungsstellung das Aktivierungselement direkt auf das Freigabeventil, beispielsweise auf dessen Schließkörper ein.

Bei anderen bevorzugten Ausführungsformen ist vorgesehen, dass zumindest in der Betätigungsstellung das Aktivierungselement indirekt auf das Freigabeventil einwirkt. Beispielsweise ist ein Stößel vorgesehen, auf welchen das Aktivierungselement, insbesondere direkt, einwirkt und mittels welchem das Freigabeventil in den Freigabezustand versetzt wird.

Insbesondere ist das Aktivierungselement beweglich gelagert, wobei eine Grundstellung und die Betätigungsstellung zu unterschiedlichen Positionen der Lagerung korrespondieren.

Bei unterschiedlichen Ausführungsformen sind verschiedene Lagerungen vorgesehen.

Vorzugsweise ist das Aktivierungselement drehbar gelagert.

Bei bevorzugten Ausführungsformen ist vorgesehen, dass die Grundstellung und die Betätigungsstellung der Freigabeeinrichtung zu unterschiedlichen Winkelpositionen des Aktivierungselements relativ zu einer Aktivierungsachse korrespondieren. Insbesondere ist dabei vorgesehen, dass eine Rotation des Aktivierungselements um die Aktivierungsachse den Übergang von der Grundstellung in die Betätigungsstellung bewirkt. Insbesondere bewirkt dabei auch eine Rotation in eine entgegengesetzte Richtung einen Übergang von der Betätigungsstellung in die Grundstellung.

Beispielsweise unterscheiden sich die Winkelpositionen die zu der Grundstellung und zu der Betätigungsstellung korrespondieren um höchstens 180°, beispielsweise um höchsten 90°, vorzugsweise um höchstens 50°, beispielsweise um höchstens 20°. Bevorzugt ist es, wenn sich die Winkelpositionen, die zu der Grundstellung und zu der Betätigungsstellung korrespondieren, um mindestens 1°, vorzugsweise um mindestens 5°, unterscheiden. Insbesondere bewirkt auch eine Rotation des Aktivierungselements um die Aktivierungsachse um einen Winkel wie voranstehend erläutert den Übergang von der Grundstellung in die Betätigungsstellung beziehungsweise bei einer Rotation in eine entgegengesetzte Richtung den Übergang von der Betätigungsstellung in die Grundstellung.

Insbesondere ist vorgesehen, dass das Aktivierungselement auf der Seite des Hydraulikanschlusses von dem Ventilsitz angeordnet ist. Beispielsweise wird hierdurch ein günstiges Einwirken zum Versetzen des Freigabeventils in den Freigabezustand entgegen dem Druck des Hydraulikmediums in der Drucckammer ermöglicht.

Bei einigen bevorzugten Ausführungsformen ist vorgesehen, dass der Bowdenzug, insbesondere direkt, an das Aktivierungselement angreifend gekoppelt ist und eine Betätigung des Bowdenzugs das Aktivierungselement in die Betätigungsstellung versetzt, insbesondere eine hierfür erforderliche Rotation des Aktivierungselements bewirkt.

Bei bevorzugten Ausführungsformen ist vorgesehen, dass die Freigabeeinrichtung einen Stößel umfasst. Vorzugsweise wirkt der Stößel in der Betätigungsstellung auf das Freigabeventil, beispielsweise auf den Schließkörper, dieses in den Freigabezustand versetzend ein. Insbesondere wirkt dabei der Stößel direkt auf den Schließkörper ein. Beispielsweise drückt der Stößel in der Betätigungsstellung den Schließkörper aus einer Schließstellung heraus, insbesondere in einen räumlichen Abstand zu der Dichtung.

Besonders günstig ist es, wenn der Stößel durch eine Ventildurchführung des Ventilsitzes zumindest in der Betätigungsstellung hindurchgreift. Beispielsweise wird hierdurch ein konstruktiv einfaches Einwirken des Stößels auf den Schließkörper ermöglicht, um den Schließkörper in der Betätigungsstellung in einen räumlichen Abstand zu dem Ventilsitz zu drücken.

Ferner ist vorteilhafterweise vorgesehen, dass das Aktivierungselement einen Verdrängerabschnitt aufweist, wobei der Verdrängerabschnitt bei einem Übergang von der Grundstellung in die Betätigungsstellung auf den Stößel, insbesondere direkt, einwirkt.

Besonders bevorzugt ist es, wenn das Aktivierungselement eine Aufnahme für den Stößel aufweist, wobei in der Grundstellung der Stößel in der Aufnahme aufgenommen ist und bei einem Übergang von der Grundstellung in die Betätigungsstellung der Verdrängerabschnitt den Stößel aus der Aufnahme verdrängt.

Besonders günstig ist die Ausbildung des Aktivierungselements mit einer Aufnahme für den Stößel und beispielsweise weiteren Merkmalen wie voranstehend erläutert, bei dem drehbar um die Aktivierungsachse angeordneten Aktivierungselement wie voranstehend erläutert.

Bei besonders günstigen Ausführungsformen ist vorgesehen, dass die Ventilsteuerung ein Rückschlagventil umfasst. Vorzugsweise umfasst das Rückschlagventil eines oder mehrere der voranstehend im Zusammenhang mit dem Zuführventil und/oder dem Freigabeventil erläuterten Merkmale. Insbesondere sind Funktionen der Ventilsteuerung mit einem derart ausgebildeten Rückschlagventil besonders einfach zu erfüllen. Insbesondere ist vorgesehen, dass das Rückschlagventil ein federbeaufschlagtes und/oder entsperrbares und/oder mechanisch betätigbares Rückschlagventil ist, wobei bezüglich der Vorteile hiervon und näheren Details hierzu insbesondere auf die Ausführungen im Zusammenhang mit dem Zuführventil und dem Freigabeventil verwiesen wird, um Wiederholungen zu vermeiden.

Bei besonders vorteilhaften Ausführungsformen ist vorgesehen, dass das Rückschlagventil das Zuführventil und/oder das Freigabeventil ausbildet. Somit ist also das Zuführventil und/oder das Freigabeventil als Rückschlagventil ausgebildet, wobei insbesondere die voranstehend erläuterten Merkmale im Zusammenhang mit diesen Ventilen bei einem Rückschlagventil, insbesondere der voranstehend genannten Art, in konstruktiv einfacher Weise realisierbar sind.

Bei einigen vorteilhaften Ausführungsformen ist vorgesehen, dass die Ventilsteuerung ein Wegeventil umfasst. Beispielsweise ist ein Vorteil hiervon, dass an das Wegeventil mehrere Verbraucher des von der Gebereinheit zur Verfügung gestellten druckbeaufschlagten Hydraulikmediums anschließbar sind und eine Versorgung der Verbraucher mit diesem Hydraulikmedium mittels des Wegeventils besonders günstig gesteuert werden kann. Beispielsweise ist ein 3-Wege-Ventil vorgesehen, so dass zwei Verbraucher anschließbar sind.

Insbesondere weist das Wegeventil hinsichtlich der an dieses angeschlossenen hydraulischen Beaufschlagungsvorrichtung den Öffnungszustand und Sperrzustand des Zuführventils und/oder dem Freigabezustand und Schließzustand des Freigabeventils korrespondierende Zustände auf, so dass hinsichtlich bevorzugter Ausgestaltungen des Wegeventils und der korrespondierenden Zustände auf die voranstehenden Ausführungen entsprechend vollinhaltlich verwiesen wird.

Bei einigen günstigen Ausführungsformen ist vorgesehen, dass das Zuführventil und das Freigabeventil separate Ventile sind. Beispielsweise können diese dann entsprechend ihren speziellen Anforderungen und dennoch in konstruktiv einfacher Weise ausgebildet werden.

Bei anderen vorteilhaften Ausführungsformen ist vorgesehen, dass das Zuführventil und das Freigabeventil als ein gemeinsames Ventil ausgebildet sind, insbesondere zusammen als ein Rückschlagventil ausgebildet sind. Besonders bevorzugt ist es, wenn dieses Rückschlagventil eines oder mehrere der voranstehend im Zusammenhang mit dem Rückschlagventil erläuterten Merkmale aufweist. Ein Vorteil von dieser Lösung ist darin zu sehen, dass durch die gemeinsame Ausbildung des Zuführventils und des Freigabeventils die Ventilsteuerung kompakter auszubilden ist und diese komplexe Ventilsteuerung auch bei dem geringen zur Verfügung stehenden Bauraum bei Leichtgewichtfahrzeugen anordenbar ist.

Hinsichtlich der Anordnung der Ventile wurden bislang keine näheren Angaben gemacht.

Bei einigen Ausführungsformen ist vorgesehen, dass zumindest eines der Ventile, beispielsweise mehrere der Ventile der Ventilsteuerung als separate Einheiten vorgesehen sind, beispielsweise außerhalb des Gehäuses der Bremsvorrichtung.

Bei besonders bevorzugten Ausführungsformen ist vorgesehen, dass die Ventilsteuerung zumindest teilweise in dem Gehäuse der Bremsvorrichtung integriert ist. Dies ist insbesondere bei Leichtgewichtfahrzeugen besonders vorteilhaft, da bei diesen wenig Bauraum zur Verfügung steht und durch die integrierte Ausbildung der Ventilsteuerung weniger Bauraum erforderlich ist.

Dabei ist insbesondere vorgesehen, dass zumindest ein Ventil, vorzugsweise mehrere, beispielsweise sämtliche, der Ventile der Ventilsteuerung in dem Gehäuse angeordnet ist/sind. Somit ist/sind insbesondere das Zuführventil und/oder das Freigabeventil und/oder das Rückschlagventil in dem Gehäuse angeordnet.

Vorzugsweise ist dabei vorgesehen, dass das Gehäuse einen Ventilraum mit zumindest einem Ventil der Ventilsteuerung aufweist. Beispielsweise ist in dem Ventilraum das Zuführventil und/oder das Freigabeventil und/oder das Rückschlagventil ausgebildet.

Vorzugsweise ist in dem Ventilraum der Ventilkörper und/oder der Schließkörper angeordnet.

Besonders bevorzugt ist es, wenn in dem Ventilraum die Ventilfeder angeordnet ist.

Besonders vorteilhaft ist es, wenn das Aktivierungselement in dem Gehäuse zumindest im Wesentlichen angeordnet ist. Beispielsweise ragt nur ein Aktivierungsabschnitt aus dem Gehäuse heraus, über welchen das Aktivierungselement in die Grundstellung und/oder Betätigungsstellung versetzbar ist und an welchen insbesondere der Bowdenzug angreift. Somit ist beispielsweise auch die Freigabeeinrichtung im Wesentlichen in dem Gehäuse angeordnet und die Ventilsteuerung somit noch kompakter und bauraumsparender ausgebildet.

Besonders günstig ist es, wenn das Aktivierungselement relativ zu dem Gehäuse, insbesondere im Wesentlichen in diesem, um die Aktivierungsachse zumindest teilweise drehbar angeordnet ist, so dass beispielsweise in günstiger Weise wie voranstehend erläutert das Aktivierungselement durch eine Rotation in eine andere Stellung versetzbar ist.

Besonders vorteilhaft ist es, wenn das Aktivierungselement zumindest teilweise, insbesondere mit der Aufnahme, in einem durch das Gehäuse gebildeten Fluidkanal angeordnet ist. Beispielsweise wird hierdurch erreicht, dass das Aktivierungselement unmittelbar auf das Freigabeventil, beispielsweise mittels des Stößels einwirken kann. Insbesondere ist dabei ein Verbindungskanal vorgesehen, welcher den Ventilraum mit dem das Aktivierungselement aufweisenden Fluidkanal fluidführend verbindet und welcher vorzugsweise auch durch das Gehäuse ausgebildet ist. Dabei ist es besonders günstig, wenn dieser Verbindungskanal die Ventildurchführung eines Ventils der Ventilsteuerung ausbildet, beispielsweise die Ventildurchführung des Zuführventils und/oder des Freigabeventils und/oder des Rückschlagventils. Dies ermöglicht insbesondere eine kompakte Bauweise der Ventilsteuerung und der Freigabeeinrichtung. Insbesondere ist dabei das Einwirken des Stößels besonders günstig zu erreichen, wenn dieser in dem Verbindungskanal angeordnet ist, so dass auf einer Seite des Stößels dieser an das Aktivierungselement ankoppeln kann, beispielsweise in der Aufnahme aufgenommen werden kann, und auf seiner gegenüberliegenden Seite der Stößel auf das Ventil einwirken kann.

Hinsichtlich weiterer Ausgestaltungen des Bremssystems wurden bislang keine detaillierteren Angaben gemacht.

Besonders vorteilhaft ist es, wenn das Bremssystem eine Betriebsbremse umfasst. Dabei ist die Betriebsbremse insbesondere vorgesehen, um bei einer Fahrt des Fahrzeugs bremsend auf dieses einzuwirken um eine Geschwindigkeitsreduktion, beispielsweise von einer hohen Fahrtgeschwindigkeit zu einer geringeren Fahrtgeschwindigkeit, welche immer noch größer als Null ist, zu erreichen. Somit ist also insbesondere die Betriebsbremse vorgesehen, um bei einer Fahrt des Fahrzeugs dessen Geschwindigkeit zu steuern. Insbesondere umfasst dabei die Geschwindigkeitssteuerung bei der Fahrt auch die Fahrtgeschwindigkeit auf Null zu reduzieren um zu einem Stillstand des Fahrzeugs zu gelangen. Insbesondere wirkt die Betriebsbremse bei einer Betätigung derselben, beispielsweise durch den Fahrer des Fahrzeugs, bremswirksam, vorzugsweise mit einem Bremsring der an einem Rad des Fahrzeugs angeordnet ist. Beispielsweise ist also die Betriebsbremse eine Scheibenbremse. Jedoch ist die Betriebsbremse nicht geeignet, um ein Verharren des Fahrzeugs im Stillstand zu erreichen, da die Betriebsbremse insbesondere lediglich bei einer Betätigung derselben bremswirksam ist und für das Verharren des Fahrzeugs im Stillstand eine Bremse, wie beispielsweise eine Feststellbremse, gewünscht ist, welche auch bei einem Ende der Betätigung derselben bremswirksam ist.

Besonders günstig ist es, wenn die Betriebsbremse eine hydraulische Betriebsbremse ist. Dabei ist vorzugsweise vorgesehen, dass die hydraulische Betriebsbremse an eine Gebereinheit fluidführend verbindbar ist und/oder mit der Gebereinheit fluidführend verbunden ist, so dass insbesondere mittels der Gebereinheit der hydraulischen Betriebsbremse druckbeaufschlagtes Hydraulikmedium zur Verfügung gestellt werden kann.

Insbesondere ist dabei die Betriebsbremse mit der gleichen Gebereinheit wie die hydraulische Beaufschlagungsvorrichtung verbindbar und/oder verbunden. Beispielsweise ist ein Vorteil hiervon, dass mit der gleichen Gebereinheit sowohl die Betriebsbremse als auch die hydraulische Beaufschlagungsvorrichtung betätigbar sind und somit bauraumsparend nur eine Gebereinheit erforderlich ist und die Handhabung des Bremssystems mit nur einer Gebereinheit einfacher ist.

Insbesondere ist ein besonderer Vorteil, dass durch Betätigen der einen Gebereinheit zum Einen die Betriebsbremse in einen bremswirksamen Zustand versetzt wird und zum Anderen die von der hydraulischen Beaufschlagungsvorrichtung ausgebildete Lösevorrichtung ausgelöst wird. Somit kann ein Fahrer des Fahrzeugs die Feststellbremse lösen und gleichzeitig die Betriebsbremse in den bremswirksamen Zustand versetzen, so dass beim Lösen der Feststellbremse bis zu dem von dem Fahrer definierten Ende der Betätigung der Gebereinheit stets eine der Bremsen bremswirksam auf das Fahrzeug einwirkt, wodurch ein Anfahren vorzugsweise vereinfacht wird, da selbst beim Lösen der Feststellbremse ein ungewolltes Losrollen des Fahrzeugs zumindest erschwert oder gar verhindert wird.

Beispielsweise weist bei dem Bremssystem mit der Betriebsbremse und der Feststellbremse die Ventilsteuerung das Wegeventil auf, so dass mittels diesem gesteuert werden kann, welche der Bremsen mit dem von der Gebereinheit zur Verfügung gestellten druckbeaufschlagten Hydraulikmedium versorgt werden soll.

Bei anderen günstigen Ausführungsformen ist vorgesehen, dass die hydraulische Betriebsbremse im Wesentlichen direkt mit der Gebereinheit fluidführend verbindbar und/oder verbunden ist und die Ventilsteuerung insbesondere das Zuführventil und Freigabeventil umfasst, welche bei besonders vorteilhaften Lösungen gemeinsam als das Rückschlagventil ausgebildet sind, und die hydraulische Druckkammer der hydraulischen Beaufschlagungsvorrichtung wie voranstehend erläutert über die Ventilsteuerung mit der Gebereinheit fluidführend verbindbar und/oder verbunden ist. Beispielsweise entfaltet sich bei dieser Lösung der Vorteil des gleichzeitigen Betätigens der Betriebsbremse und des Auslösens der hydraulischen Lösevorrichtung mittels Bereitstellen von druckbeaufschlagtem Hydraulikmedium durch Betätigung der Gebereinheit besonders günstig.

Bei besonders bevorzugten Ausführungsformen ist vorgesehen, dass die Bremsvorrichtung eine Justierungseinrichtung umfasst. Dabei ist die Justierungseinrichtung vorgesehen zur Justierung der Bremsvorrichtung bei einer Montage derselben an einem Fahrzeug, beispielsweise um eine gewünschte und wohl definierte Ausrichtung der Bremsvorrichtung in dem an das Fahrzeug montierten Zustand zu erreichen. Insbesondere ist eine gute Justierung und wohl definierte Ausrichtung der Bremsvorrichtung für ein im Wesentlichen schleiffreies Wirken der Bremsvorrichtung erforderlich, wobei dies insbesondere bei Leichtgewichtfahrzeugen gewünscht und erfordert ist. Insbesondere ist die Ausrichtung der Bremsbackeneinheiten relativ zu dem Bremsring dabei erforderlich.

Bei besonders vorteilhaften Ausführungsformen ist vorgesehen, dass das Gehäuse die Justierungseinrichtung umfasst. Beispielsweise weist die Justierungseinrichtung dabei von dem Gehäuse sich erstreckende Flanschvorsprünge auf, insbesondere mit zumindest einem Langloch zur Justierung mittels Befestigungsmitteln.

Alternativ oder ergänzend betrifft die erfindungsgemäße Lösung auch ein Fahrzeug mit einem Bremssystem, welches zumindest eines, vorzugsweise mehrere, der voranstehend erläuterten Merkmale umfasst.

Dabei ist das Fahrzeug insbesondere ein Leichtgewichtfahrzeug wie eingangs erläutert.

Voranstehend und nachfolgend ist unter der Formulierung zumindest näherungsweise im Zusammenhang mit einer Angabe insbesondere zu verstehen, dass technisch bedingte und/oder technisch nicht relevante Abweichungen von der Angabe mit umfasst sind. Beispielsweise sind Abweichungen von bis zu 20 %, vorzugsweise von bis zu 10 %, beispielsweise von bis zu 5 %, von der Angabe mit umfasst.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Bremssystem (100) für ein Fahrzeug (112), insbesondere ein Leichtgewichtfahrzeug, insbesondere ein Fahrrad, umfassend eine Bremsvorrichtung (212), eine mechanische Beaufschlagungsvorrichtung (214) und eine hydraulische Beaufschlagungsvorrichtung (216), wobei die mechanische Beaufschlagungsvorrichtung (214) und die Bremsvorrichtung (212) eine Feststellbremsvorrichtung (210) bilden und die hydraulische Beaufschlagungsvorrichtung (216) eine hydraulisch betätigbare Lösevorrichtung (218) für die Feststellbremsvorrichtung (210) ausbildet.
2. Bremssystem (100) nach Ausführungsform 1, wobei das Bremssystem zumindest einen Bremszustand und mindestens eine Lösezustand aufweist, wobei in dem Bremszustand die Feststellbremsvorrichtung (210) bremswirksam ist und in dem Lösezustand inaktiv ist.
3. Bremssystem (100) nach einer der voranstehenden Ausführungsformen, wobei die mechanische Beaufschlagungsvorrichtung (214) ausgebildet ist und relativ zu der Bremsvorrichtung (212) angeordnet ist, dass eine Beaufschlagung durch die mechanische Beaufschlagungsvorrichtung (214) die Bremsvorrichtung (212) in den Bremszustand versetzt.
4. Bremssystem (100) nach einer der voranstehenden Ausführungsformen, wobei die hydraulische Beaufschlagungsvorrichtung (216) ausgebildet ist und relativ zu der Bremsvorrichtung (212) angeordnet ist, dass eine Beaufschlagung durch die hydraulische Beaufschlagungsvorrichtung (216) die Bremsvorrichtung (212) in den Lösezustand versetzt.
5. Bremssystem (100) nach einer der voranstehenden Ausführungsformen, wobei die Bremsvorrichtung (212) zwei Bremsbackeneinheiten (312, 314) umfasst, welche insbesondere in dem Bremszustand bremswirksam wirken, insbesondere mit einem Bremsring bremswirksam zusammenwirken.
6. Bremssystem (100) nach der voranstehenden Ausführungsform, wobei zwischen den zwei Bremsbackeneinheiten (312, 314) diese einen Bremsaufnahmeraum (316) definieren, welcher insbesondere zur Aufnahme zumindest eines Abschnitts des Bremsrings vorgesehen ist, und wobei insbesondere der Bremsaufnahmeraum (316) in dem Bremszustand kleiner ist als in dem Lösezustand.
7. Bremssystem (100) nach einer der voranstehenden Ausführungsformen, wobei dieses, insbesondere die Bremsvorrichtung (212), zumindest einen, insbesondere genau einen, Beaufschlagungskolben (352) umfasst, wobei insbesondere der Beaufschlagungskolben (352) bei einer Beaufschlagung desselben die Bremsvorrichtung (212) in einen anderen Zustand versetzt, insbesondere in Abhängigkeit einer Orientierung einer Beaufschlagungsrichtung in den mindestens einen Bremszustand und/oder in den mindestens einen Lösezustand versetzt.
8. Bremssystem (100) nach einer der voranstehenden Ausführungsformen, wobei der Beaufschlagungskolben (352) in einem Kolbenführungsraum (362) eines Gehäuses (302) der Bremsvorrichtung (212) angeordnet ist, insbesondere, dass der Beaufschlagungskolben (352) in einer Beaufschlagungsrichtung linear beweglich relativ zu dem Gehäuse (302) in diesem angeordnet ist.
9. Bremssystem (100) nach der voranstehenden Ausführungsform, wobei der Kolbenführungsraum (362) Kolbenführungsflächen (368) aufweist und dass der Beaufschlagungskolben (352) entlang der Kolbenführungsflächen (368) und geführt von diesen beweglich in dem Gehäuse (302) angeordnet ist.
10. Bremssystem (100) nach einer der voranstehenden Ausführungsformen, wobei zumindest eine der Bremsbackeneinheiten (312, 314) beaufschlagungswirksam an dem Beaufschlagungskolben gekoppelt ist, insbesondere, dass zumindest in dem Bremszustand zumindest eine der Bremsbackeneinheiten (312, 314) von dem Beaufschlagungskolben (352) beaufschlagt wird.
11. Bremssystem (100) nach einer der voranstehenden Ausführungsformen, wobei ein Bremsbelag einer Bremsbackeneinheit (312, 314) an dem Beaufschlagungskolben (352), insbesondere an einer Frontseite (354) desselben, angeordnet ist, insbesondere magnetisch gehalten wird.
12. Bremssystem (100) nach einer der voranstehenden Ausführungsformen, wobei der Beaufschlagungskolben (352) zumindest mit einem Beaufschlagungsteil (382) durch einen Durchbruch (384) des Gehäuses hindurchgreift und aus diesem herausragt und dass insbesondere mit dem aus dem Durchbruch (384) herausragenden Teil die zumindest eine Bremsbackeneinheit (312, 314) beaufschlagt.
13. Bremssystem (100) nach der voranstehenden Ausführungsform, wobei in dem Durchbruch (384) eine Dichtung zur Abdichtung des Kolbenführungsraums (362) angeordnet ist.
14. Bremssystem (100) nach einer der voranstehenden Ausführungsformen, wobei der Beaufschlagungskolben (352) und die zwei Bremsbackeneinheiten (312, 314) im Wesentlichen entlang einer Beaufschlagungsachse (306) angeordnet sind.
15. Bremssystem (100) nach einer der voranstehenden Ausführungsformen, wobei der Beaufschlagungskolben (352) im Wesentlichen als einstückiger Körper ausgebildet ist.
16. Bremssystem (100) nach einer der voranstehenden Ausführungsformen, wobei der Beaufschlagungskolben (352) zumindest ein Beaufschlagungsteil (382) und ein Führungsteil (364) umfasst, wobei insbesondere eine radiale Ausdehnung des Beaufschlagungsteils (382) kleiner ist als eine radiale Ausdehnung des Führungsteils (364).
17. Bremssystem (100) nach einer der voranstehenden Ausführungsformen, wobei der Beaufschlagungskolben (352) einen vorderen axialen Anschlag (388) für eine Bremsendstellung umfasst, wobei insbesondere in der Bremsendstellung der vordere axiale Anschlag (388) mit einer insbesondere den Durchbruch (384) aufweisenden Gehäusewand (392) des Gehäuses (302) zusammenwirkt und wobei insbesondere ein zwischen dem Führungsteil (364) und dem Beaufschlagungsteil (382) angeordnetes Verbindungsteil (386) des Beaufschlagungskolbens (352) mit dem vorderen axialen Anschlag (388) versehen ist.
18. Bremssystem (100) nach einer der voranstehenden Ausführungsformen, wobei der Beaufschlagungskolben (352) einen hinteren axialen Anschlag (394) für eine Löseendstellung umfasst, wobei insbesondere der hintere axialen Anschlag (394) an einer dem Beaufschlagungsteil (382) gegenüberliegenden Seite des Beaufschlagungskolbens (352) angeordnet ist, und dass insbesondere der hintere axiale Anschlag (394) in der Löseendstellung mit einem Teil des Gehäuses (302) zusammenwirkt.
19. Bremssystem (100) nach einer der voranstehenden Ausführungsformen, wobei die Bremsvorrichtung (212) eine Verschleißnachstelleinrichtung (332) für die zwei Bremsbackeneinheiten (312, 314) umfasst.
20. Bremssystem (100) nach einer der voranstehenden Ausführungsformen, wobei die mechanische Beaufschlagungsvorrichtung (214) die Bremsvorrichtung (212) linear in der Beaufschlagungsrichtung beaufschlagt.
21. Bremssystem (100) nach einer der voranstehenden Ausführungsformen, wobei die mechanische Beaufschlagungsvorrichtung (214), insbesondere ein Federelement (422) derselben, in dem Kolbenführungsraum (362) angeordnet ist.
22. Bremssystem (100) nach einer der voranstehenden Ausführungsformen, wobei die mechanische Beaufschlagungsvorrichtung (214), insbesondere deren Federelement (422), sich an dem Beaufschlagungskolben (352) abstützend angeordnet ist (412).
23. Bremssystem (100) nach einer der voranstehenden Ausführungsformen, wobei eine erste Beaufschlagungsfläche (412) des Beaufschlagungskolben (352) für die mechanische Beaufschlagungsvorrichtung (214) an einer dem Beaufschlagungsteil (382) gegenüberliegenden Seite, insbesondere an dem Führungsteil (364), angeordnet ist.
24. Bremssystem (100) nach einer der voranstehenden Ausführungsformen, wobei die erste Beaufschlagungsfläche (412) zumindest näherungsweise senkrecht zu der Beaufschlagungsachse (306) verlaufend ausgebildet ist.
25. Bremssystem (100) nach einer der voranstehenden Ausführungsformen, wobei die mechanische Beaufschlagungsvorrichtung (212), insbesondere deren Federelement (422), sich an einer den Kolbenführungsraum (362) begrenzenden Gehäusewand abstützend ausgebildet ist, wobei insbesondere eine Abstützfläche des Gehäuses (302), an welcher sich die mechanische Beaufschlagungsvorrichtung (212) abstützt, an einem dem Durchbruch (384) gegenüberliegenden axialen Ende des Kolbenführungsraums (362) angeordnet ist.
26. Bremssystem (100) nach einer der voranstehenden Ausführungsformen, wobei die mechanische Beaufschlagungsvorrichtung (212), insbesondere deren Federelement (422), unter Vorspannung die Bremsvorrichtung (212) beaufschlagend montiert ist.
27. Bremssystem (100) nach einer der voranstehenden Ausführungsformen, wobei das Federelement (422) einen Teil des Beaufschlagungskolbens (352) umgreift.
28. Bremssystem (100) nach einer der voranstehenden Ausführungsformen, wobei die hydraulische Beaufschlagungsvorrichtung (216) eine hydraulische Druckkammer (256) aufweist, wobei insbesondere der Kolbenführungsraum (362) die hydraulische Druckkammer (256) umfasst.
29. Bremssystem (100) nach einer der voranstehenden Ausführungsformen, wobei die hydraulische Druckkammer (256) von dem Beaufschlagungskolben (352) und dem Gehäuse (302) begrenzt wird.
30. Bremssystem (100) nach einer der voranstehenden Ausführungsformen, wobei ein Volumen der hydraulischen Druckkammer (256) in dem Bremszustand kleiner ist als in dem Lösezustand.
31. Bremssystem (100) nach einer der voranstehenden Ausführungsformen, wobei die hydraulische Druckkammer (256) sich entlang eines Abschnittsteils der zur Beaufschlagungsachse (306) axialen Erstreckung des Beaufschlagungskolbens (352) erstreckt, insbesondere zwischen zwei axial beabstandet an dem Beaufschlagungskolben (352) angeordneten Dichtungen erstreckt.
32. Bremssystem (100) nach einer der voranstehenden Ausführungsformen, wobei zumindest eine die hydraulische Druckkammer (256) begrenzende Dichtung an einer Führungsaußenfläche (366) des Beaufschlagungskolbens (352) angeordnet ist und/oder an einem durch den Durchbruch (384) hindurchgreifenden Teil des Beaufschlagungskolbens (352) angeordnet ist.
33. Bremssystem (100) nach einer der voranstehenden Ausführungsformen, wobei die hydraulische Druckkammer (256) in einem axialen Endbereich (372) des Kolbenführungsraums (362) angeordnet ist, wobei insbesondere die den Durchbruch (384) aufweisende Gehäusewand zumindest teilweise die hydraulische Druckkammer (256) begrenzt.
34. Bremssystem (100) nach einer der voranstehenden Ausführungsformen, wobei eine Mündungsöffnung (538) eines Fluidkanals (516) in die hydraulische Druckkammer (256) mündet und insbesondere in ein der Bremsendstellung korrespondierendes Minimalvolumen der hydraulischen Druckkammer (256) mündet.
35. Bremssystem (100) nach einer der voranstehenden Ausführungsformen, wobei die Mündungsöffnung (538) in einem zur Beaufschlagungsachse (306) axialen Endbereich des Kolbenführungsraums (362) angeordnet ist und/oder an einer zur Beaufschlagungsachse (306) radialen Seitenbegrenzungsfläche des Kolbenführungsraums (362) angeordnet ist.
36. Bremssystem (100) für ein Fahrzeug (112), insbesondere ein Leichtgewichtfahrzeug, insbesondere ein Fahrrad, insbesondere nach einer der voranstehenden Ausführungsformen, mit einer hydraulischen Beaufschlagungsvorrichtung (216) für eine Bremsvorrichtung (212), welche eine hydraulische Druckkammer (256) und eine Ventilsteuerung (550) umfasst.
37. Bremssystem (100) nach einer der voranstehenden Ausführungsformen, wobei die hydraulische Beaufschlagungsvorrichtung (216) eine Gebereinheit (222) zur Bereitstellung von einem druckbeaufschlagtem Hydraulikmedium umfasst(550).
38. Bremssystem (100) nach einer der voranstehenden Ausführungsformen, wobei die Gebereinheit (222) eine fußbetätigte oder handbetätigte Gebereinheit ist.
39. Bremssystem (100) nach einer der voranstehenden Ausführungsformen, wobei die Gebereinheit (222) einen Ausgleichsbehälter (228) mit einem Reservoir für Hydraulikmedium umfasst.
40. Bremssystem (100) nach einer der voranstehenden Ausführungsformen, wobei die Ventilsteuerung (550) ein Zuführventil (552) umfasst, welches in einem Öffnungszustand einen Durchfluss von Hydraulikmedium in einer von einem Hydraulikanschluss (564), an welche eine Gebereinheit (222) anschließbar und/oder angeschlossen ist, zur hydraulischen Druckkammer (256) orientierten Freigaberichtung freigibt und welches insbesondere auch einen Sperrzustand aufweist, in welchem kein Durchfluss von Hydraulikmedium durch das Zuführventil (552) möglich ist.
41. Bremssystem (100) nach einer der voranstehenden Ausführungsformen, wobei das Zuführventil (552) einen Ventilkörper (572) und einen Ventilsitz (576) umfasst, wobei insbesondere der Ventilkörper in dem Öffnungszustand eine von dem Ventilsitz (576) räumlich entfernte Öffnungsstellung einnimmt und in dem Sperrzustand der Ventilkörper (572) und der Ventilsitz (576) fluiddichtend zusammenwirken.
42. Bremssystem (100) nach einer der voranstehenden Ausführungsformen, wobei der Ventilkörper (572) druckkammerseitig von dem Ventilsitz (576) angeordnet ist.
43. Bremssystem (100) nach einer der voranstehenden Ausführungsformen, wobei der Ventilsitz (576) eine Dichtung, insbesondere ein Dichtring, aufweist zur Aufnahme des Ventilkörpers (572) in dessen Sperrstellung, welche der Ventilkörper (572) in dem Sperrzustand einnimmt.
44. Bremssystem (100) nach einer der voranstehenden Ausführungsformen, wobei das Zuführventil (552) ein federbeaufschlagtes Ventil ist.
45. Bremssystem (100) nach der voranstehenden Ausführungsform, wobei der Ventilkörper (572) in Richtung seiner Sperrstellung federbeaufschlagt ist (568), wobei insbesondere eine Ventilfeder (568) derart ausgelegt ist, dass diese gegenüber über den Hydraulikanschluss (564) bereitgestelltes druckbeaufschlagtes Hydraulikmedium nachgibt.
46. Bremssystem (100) nach einer der voranstehenden Ausführungsformen, wobei das Zuführventil (552) ein hydraulisch betätigtes Ventil ist, wobei insbesondere das Zuführventil (552) durch über den Hydraulikanschluss (564) bereitgestelltes druckbeaufschlagtes Hydraulikmedium in seinen Öffnungszustand versetzt wird.
47. Bremssystem (100) nach einer der voranstehenden Ausführungsformen, wobei die Ventilsteuerung (550) ein Freigabeventil (554) umfasst, welches in einem Freigabezustand einen Durchfluss von Hydraulikmedium aus der hydraulischen Druckkammer (256) freigibt und welches insbesondere einen Schließzustand aufweist, in welchem das Freigabeventil (554) zumindest gegenüber in der hydraulischen Druckkammer (256) vorhandenem Hydraulikmedium fluidabdichtend schließend wirkt.
48. Bremssystem (100) nach einer der voranstehenden Ausführungsformen, wobei das Freigabeventil (554) einen Schließkörper (574) umfasst, welcher in dem Schließzustand eine Schließstellung einnimmt, in welcher er insbesondere mit einer Dichtung (582) fluidabdichtend wirkt.
49. Bremssystem (100) nach einer der voranstehenden Ausführungsformen, wobei das Freigabeventil (554) ein federbeaufschlagtes Ventil ist, wobei insbesondere der Schließkörper (574) in Richtung seiner Schließstellung federbeaufschlagt ist.
50. Bremssystem (100) nach einer der voranstehenden Ausführungsformen, wobei das Freigabeventil (554) mittels einer insbesondere mechanischen Freigabeeinrichtung (586) in den Freigabezustand versetzbar ist.
51. Bremssystem (100) nach einer der voranstehenden Ausführungsformen, wobei die Freigabeeinrichtung (586) in einer Betätigungsstellung das Freigabeventil (554) in den Freigabezustand versetzt, wobei insbesondere mittels eines Bowdenzuges die Freigabeeinrichtung (586) in die Betätigungsstellung versetzbar ist.
52. Bremssystem (100) nach einer der voranstehenden Ausführungsformen, wobei die Freigabeeinrichtung (586) federbeaufschlagt ist, wobei insbesondere die Freigabeeinrichtung (586) durch die Federbeaufschlagung aus der Betätigungsstellung heraus versetzt, insbesondere in eine Grundstellung hineinversetzt, wird.
53. Bremssystem (100) nach einer der voranstehenden Ausführungsformen, wobei die Freigabeeinrichtung (586) ein Aktivierungselement (592) umfasst, mittels welchem in der Betätigungsstellung das Freigabeventil (554) in den Freigabezustand versetzt wird.
54. Bremssystem (100) nach einer der voranstehenden Ausführungsformen, wobei die Grundstellung und die Betätigungsstellung der Freigabeeinrichtung (586) zu unterschiedlichen Winkelpositionen des Aktivierungselements (592) relativ zu einer Aktivierungsachse (594) korrespondieren, und wobei insbesondere eine Rotation des Aktivierungselements (592) um die Aktivierungsachse (594) den Übergang von der Grundstellung in die Betätigungsstellung bewirkt.
55. Bremssystem (100) nach einer der voranstehenden Ausführungsformen, wobei die Freigabeeinrichtung (586) einen Stößel (624) umfasst und das Aktivierungselement (592) einen Verdrängerabschnitt (632) aufweist, wobei der Verdrängerabschnitt (632) bei einem Übergang von der Grundstellung in die Betätigungsstellung auf den Stößel (624) einwirkt.
56. Bremssystem (100) nach einer der voranstehenden Ausführungsformen, wobei das Aktivierungselement (592) eine Aufnahme (622) für den Stößel (624) aufweist, wobei in einer Grundstellung der Stößel (624) in der Aufnahme (622) aufgenommen ist und bei einem Übergang von der Grundstellung in die Betätigungsstellung der Verdrängerabschnitt (632) den Stößel (624) aus der Aufnahme verdrängt.
57. Bremssystem (100) nach einer der voranstehenden Ausführungsformen, wobei der Stößel (624) durch eine Ventildurchführung (626) des Ventilsitzes (576) zumindest in der Betätigungsstellung hindurchgreift.
58. Bremssystem (100) nach einer der voranstehenden Ausführungsformen, wobei das Aktivierungselement (592) auf der Seite des Hydraulikanschlusses (564) von dem Ventilsitz (576) angeordnet ist.
59. Bremssystem (100) nach einer der voranstehenden Ausführungsformen, wobei die Ventilsteuerung (550) ein Rückschlagventil (558) umfasst, wobei insbesondere das Rückschlagventil (558) eines oder mehrerer Merkmale des Zuführventils (552) und/oder des Freigabeventils (554) gemäß eines oder mehrerer der voranstehenden Ausführungsformen umfasst, wobei insbesondere das Rückschlagventil (558) ein federbeaufschlagtes und/oder entsperrbares und/oder mechanisch betätigbares Rückschlagventil (558) ist.
60. Bremssystem (100) nach einer der voranstehenden Ausführungsformen, wobei das Rückschlagventil (558) das Zuführventil (552) und/oder das Freigabeventil (554) ausbildet.
61. Bremssystem (100) nach der voranstehenden Ausführungsform, wobei die Ventilsteuerung (550) ein Wegeventil (712), insbesondere ein 3-Wege-Ventil, umfasst.
62. Bremssystem (100) nach einer der voranstehenden Ausführungsformen, wobei das Zuführventil (552) und das Freigabeventil (554) durch ein einziges Ventil (552, 554, 558) ausgebildet werden.
63. Bremssystem (100) nach einer der voranstehenden Ausführungsformen, wobei die Ventilsteuerung (550) zumindest teilweise in dem Gehäuse (302) integriert ist, insbesondere, dass das Zuführventil (552) und/oder das Freigabeventil (554) und/oder das Rückschlagventil (558) in dem Gehäuse (302) angeordnet ist/sind.
64. Bremssystem (100) nach einer der voranstehenden Ausführungsformen, wobei das Gehäuse (302) einen Ventilraum (562) mit zumindest einem Ventil der Ventilsteuerung (550) aufweist.
65. Bremssystem (100) nach der voranstehenden Ausführungsform, wobei in dem Ventilraum (562) der Ventilkörper (572) und/oder der Schließkörper (574) und insbesondere die Ventilfeder (568) angeordnet sind.
66. Bremssystem (100) nach einer der voranstehenden Ausführungsformen, wobei das Aktivierungselement (592) in dem Gehäuse (302) zumindest im Wesentlichen angeordnet ist, insbesondere relativ zu dem Gehäuse (302) um die Aktivierungsachse (594) zumindest teilweise drehbar angeordnet ist.
67. Bremssystem (100) nach einer der voranstehenden Ausführungsformen, wobei das Aktivierungselement (592) zumindest teilweise, insbesondere mit der Aufnahme (AU), in einem durch das Gehäuse (302) gebildeten Fluidkanal angeordnet ist und wobei insbesondere ein Verbindungskanal (578), welcher den Ventilraum (562) mit dem das Aktivierungselement (592) aufweisenden Fluidkanal fluidführend verbindet, die Ventildurchführung eines Ventils der Ventilsteuerung (550) ausbildet.
68. Bremssystem (100) nach einer der voranstehenden Ausführungsformen, wobei dieses eine insbesondere hydraulische Betriebsbremse (BBR) umfasst, welche insbesondere mittels der Ventilsteuerung (550) mit einer Gebereinheit (222) fluidführend verbindbar ist und/oder mit der Gebereinheit (222) fluidführend verbunden ist.
69. Bremssystem (100) nach einer der voranstehenden Ausführungsformen, wobei die Bremsvorrichtung (212), insbesondere deren Gehäuse (302), eine Justierungseinrichtung (670) umfasst zur Justierung derselben bei einer Montage an ein Fahrzeug (112).
70. Fahrzeug (112), insbesondere Leichtgewichtfahrzeug, insbesondere Fahrrad, umfassend ein Bremssystem (100) nach einer der voranstehenden Ausführungsformen.

Weitere Vorteile und bevorzugte Merkmale der erfindungsgemäßen Lösung sind Gegenstand der nachstehenden Beschreibung einiger Ausführungsbeispiele und deren zeichnerischen Darstellung.

In der Zeichnung zeigen:
- Fig. 1: eine schematische Darstellung eines Bremssystems eines ersten Ausführungsbeispiels;
- Fig. 2: eine Darstellung eines Lastenfahrrads als Beispiel für ein Leichtgewichtfahrzeug mit einem Bremssystem;
- Fig. 3: eine perspektivische Darstellung eines Gehäuses einer Bremsvorrichtung des Bremssystems;
- Fig. 4: eine Draufsicht von der Seite auf das Gehäuse;
- Fig. 5: einen Schnitt V-V, wie in Fig. 4 eingezeichnet, durch das Gehäuse;
- Fig. 6: einen Schnitt VI-VI, wie in Fig. 4 eingezeichnet, durch das Gehäuse;
- Fig. 7: eine ausschnittsweise vergrößerte Darstellung gemäß Fig. 6 im Bereich einer Bremsvorrichtung mit Bremsbackeneinheiten und einem Beaufschlagungskolben;
- Fig. 8: eine Darstellung im Wesentlichen wie in Fig. 7 im Wesentlichen zur Beschreibung einer mechanischen Beaufschlagungsvorrichtung;
- Fig. 9: eine Darstellung im Wesentlichen wie in Fig. 7 im Wesentlichen zur Beschreibung einer hydraulischen Beaufschlagungsvorrichtung;
- Fig. 10: eine ausschnittsweise vergrößerte Darstellung gemäß Fig. 6 im Bereich einer Ventilsteuerung;
- Fig. 11: einen Schnitt XI-XI, wie in Fig. 4 eingezeichnet, durch das Gehäuse;

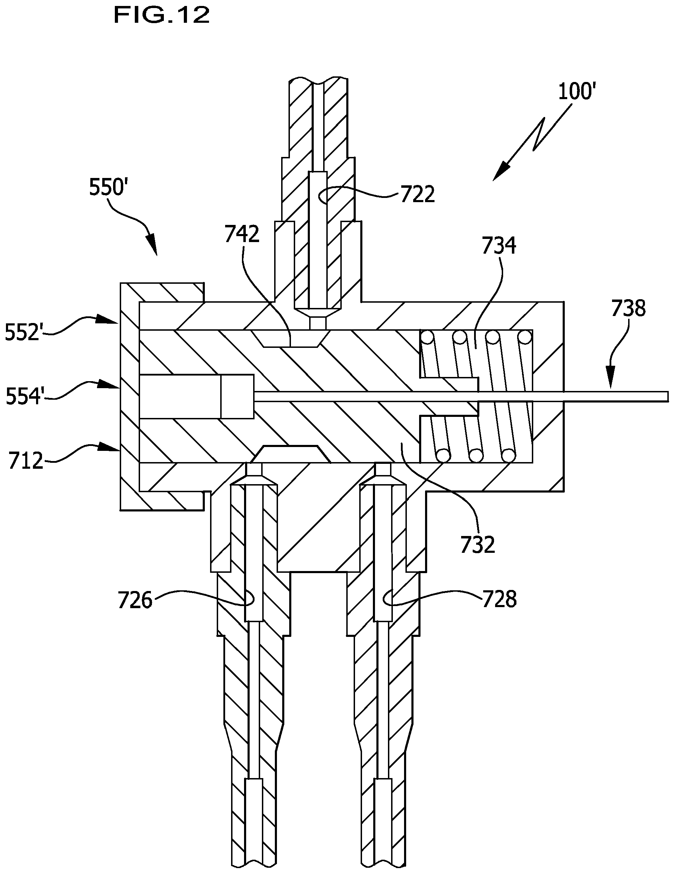

- Fig. 12: eine Schnittdarstellung eines mechanischen Wegeventils gemäß eines zweiten Ausführungsbeispiels und

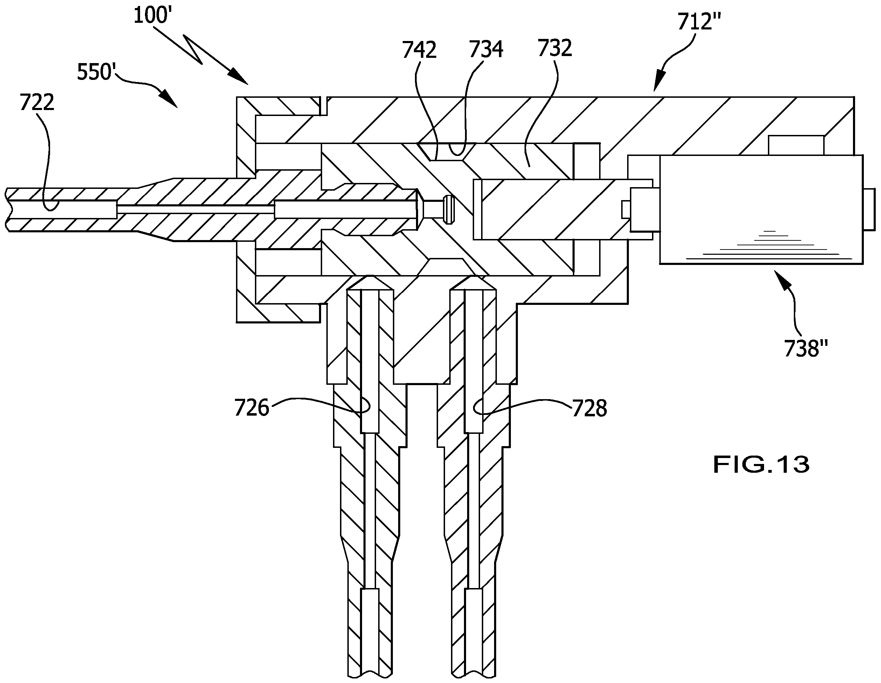

- Fig. 13: eine Schnittdarstellung eines elektrisch betätigbaren Wegeventils gemäß einer Variante des zweiten Ausführungsbeispiels.

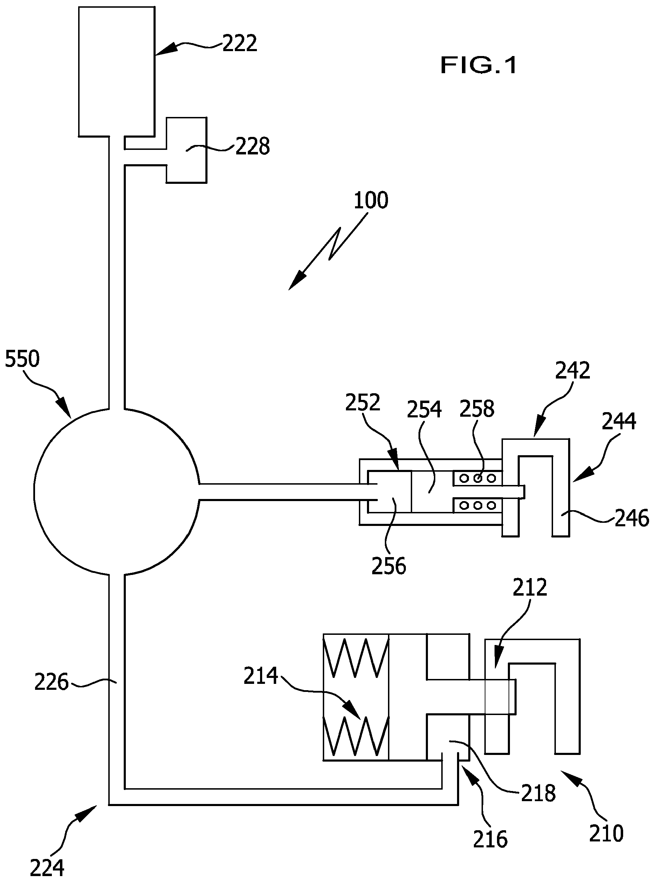

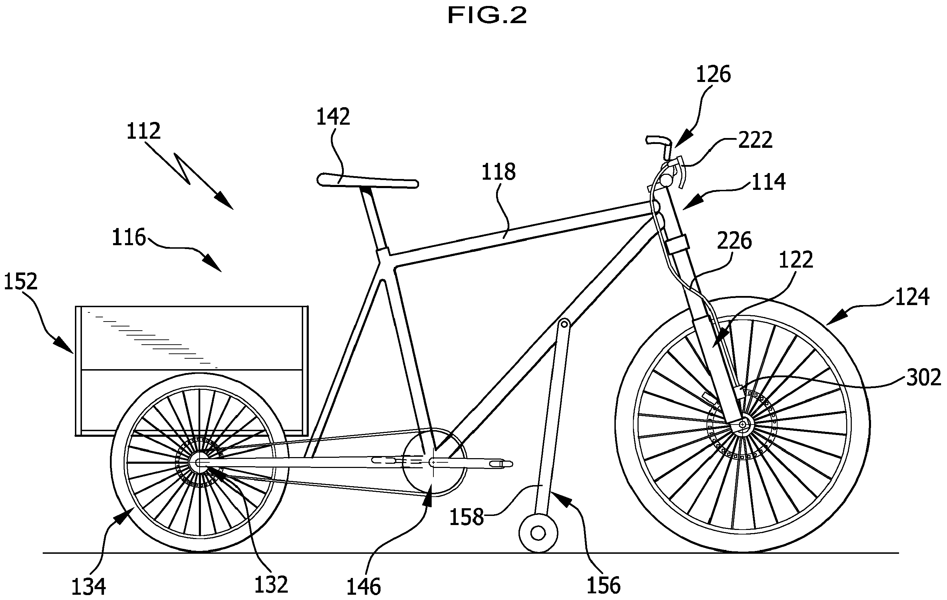

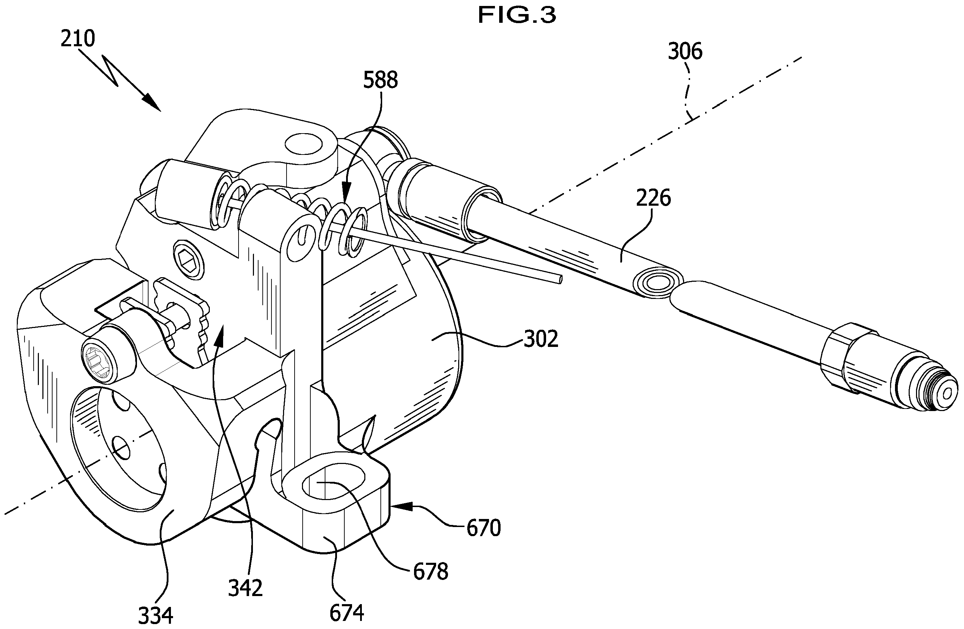

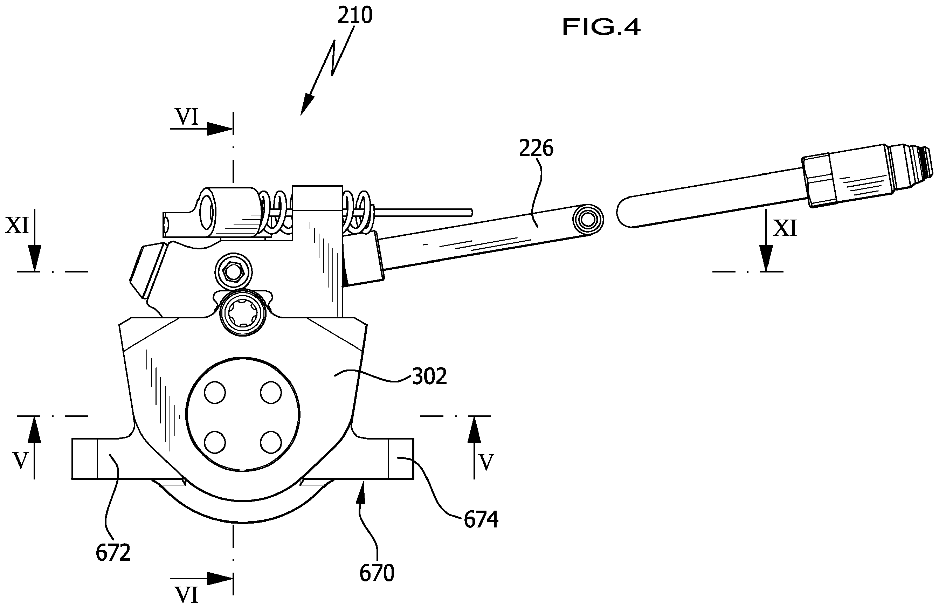

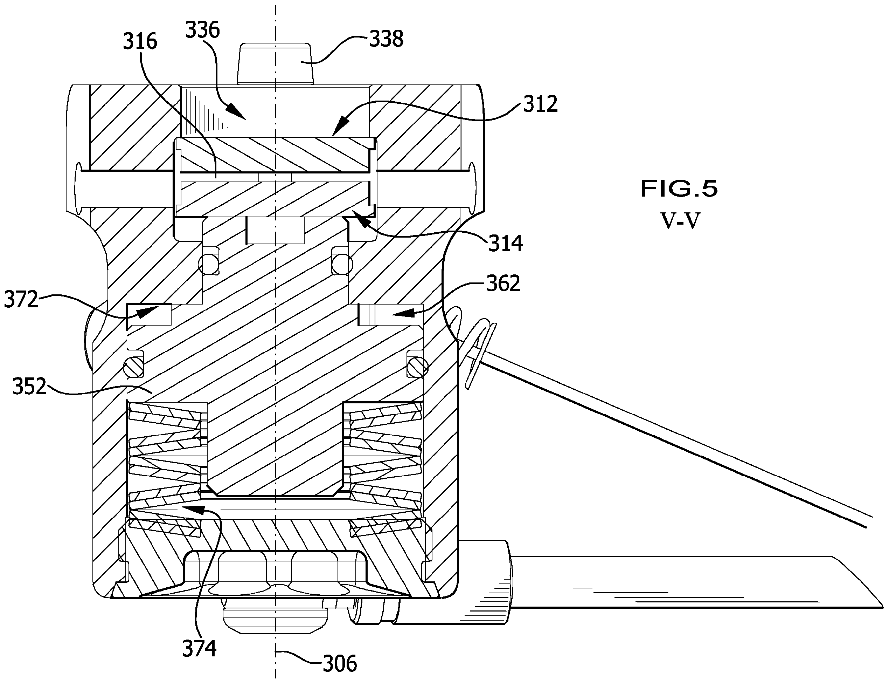

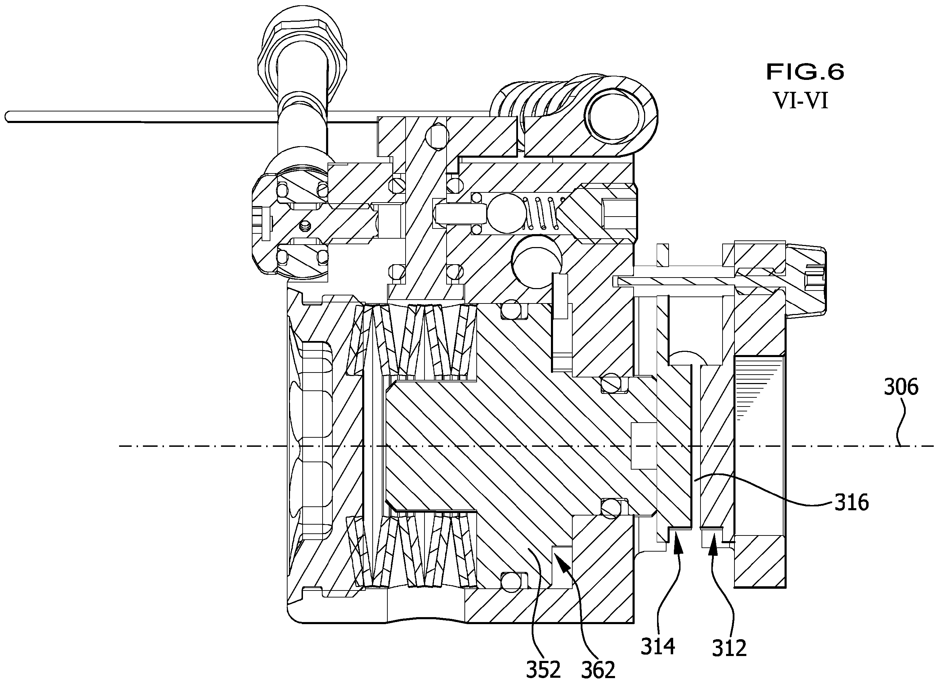

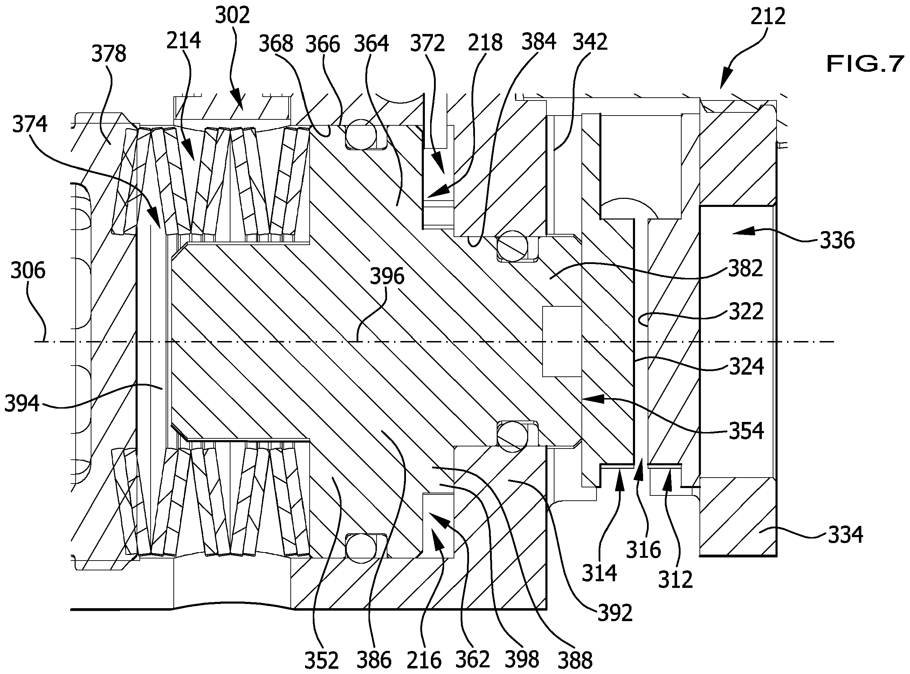

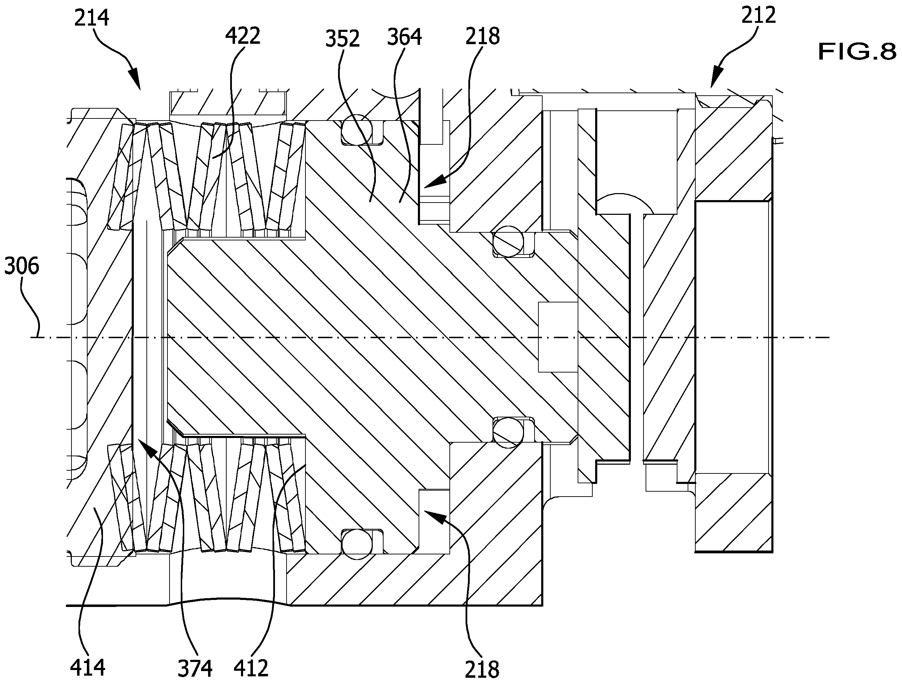

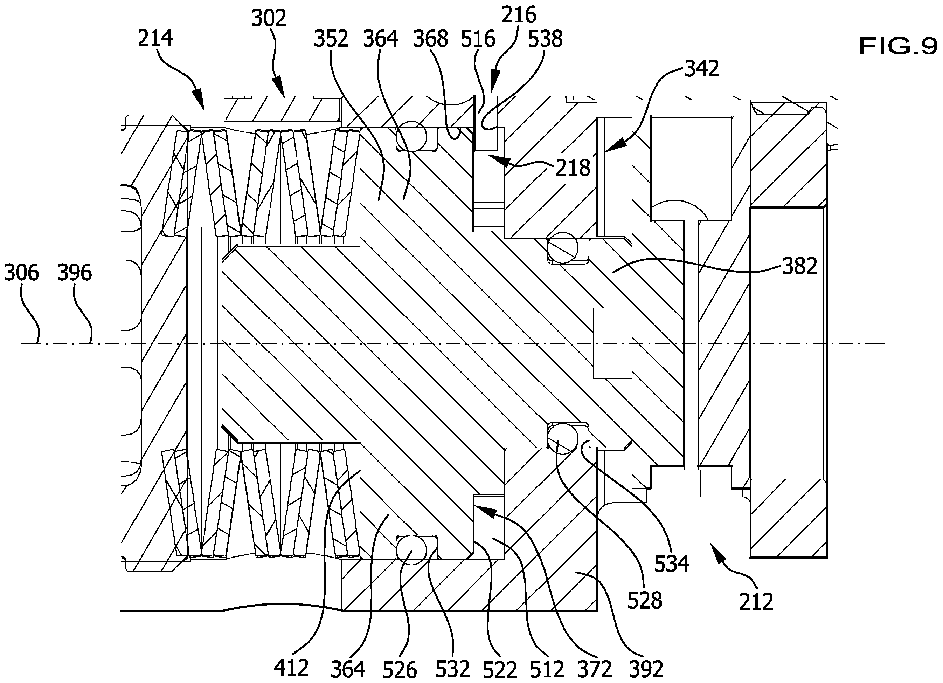

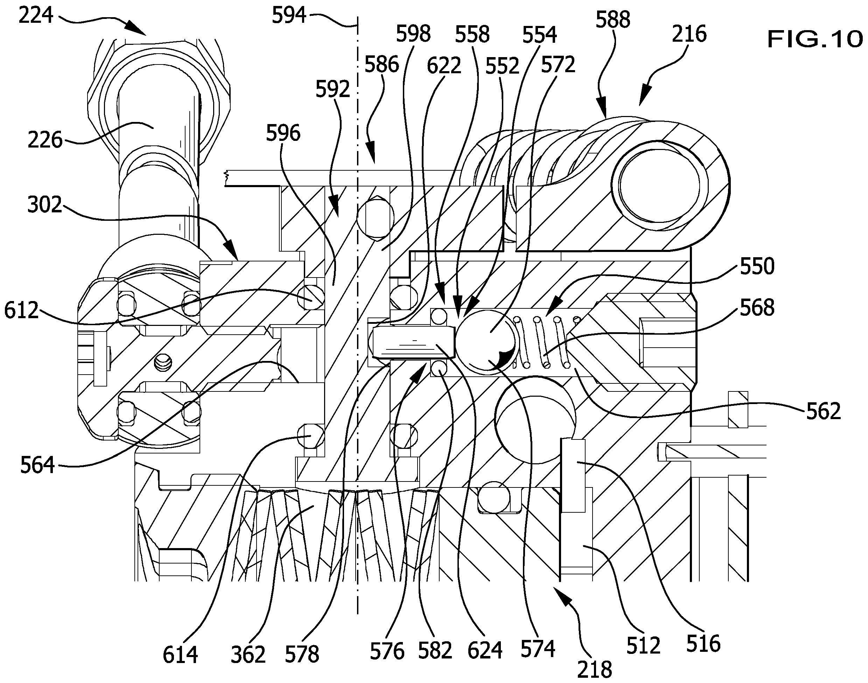

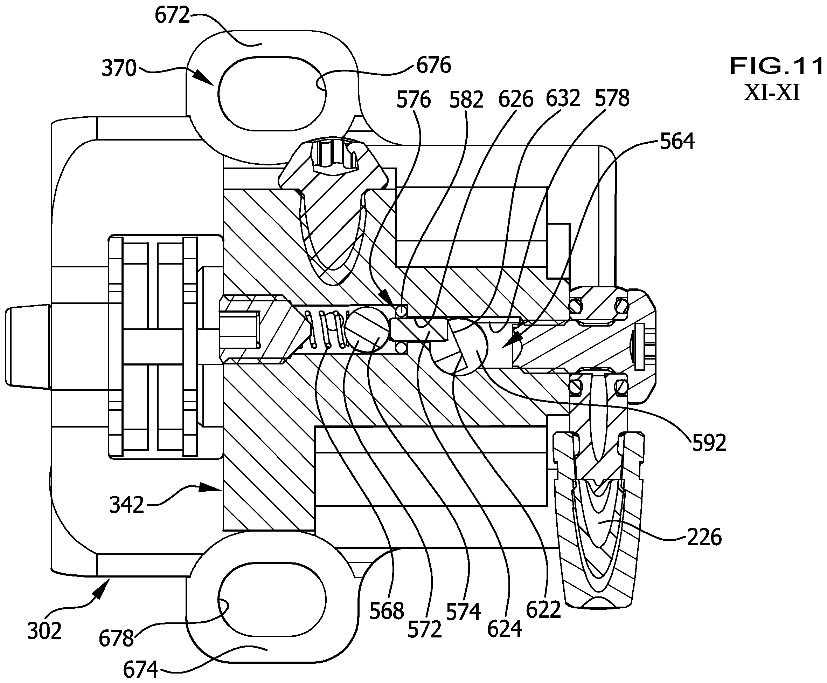

Ein erstes Ausführungsbeispiel eines im Ganzen mit 100 bezeichneten Bremssystems ist bei einem Fahrzeug 112 verwendbar und an dieses angeordnet. Beispielhaft ist das Bremssystem 100 schematisch in Fig. 1 und bevorzugte Ausgestaltungen sind in Fig. 2 bis 11 dargestellt.

Das Fahrzeug 112 ist insbesondere ein Leichtgewichtfahrzeug und bei diesem Ausführungsbeispiel ein Lastenfahrrad als Beispiel für ein Fahrrad, welches beispielhaft in Fig. 2 dargestellt ist. Bei Varianten des Ausführungsbeispiels ist das Fahrzeug ein gewöhnliches Fahrrad ohne Hilfsantrieb oder mit Hilfsantrieb beispielsweise ein Pedelec oder ein E-Bike. Auch ist das Bremssystem 100 bei anderen insbesondere lenkergeführten Leichtgewichtfahrzeugen einsetzbar.

Das Fahrzeug 112 umfasst einen von einer Vorderseite 114 bis zu einer Hinterseite 116 erstrecken Rahmen 118, welcher insbesondere aus mehreren Streben ausgebildet ist. Dabei sind die Vorderseite 114 und die Rückseite 116 auf eine übliche Fahrtrichtung des Fahrzeugs 112 bezogen, so dass die Vorderseite 114 bei einer üblichen Vorwärtsfahrt des Fahrzeugs 112 vorne und die Rückseite 116 hinten bei dem Fahrzeug 112 ist.

An der Vorderseite 114 umfasst der Rahmen 118 eine vordere Radaufhängung 122 für insbesondere ein Vorderrad 124, welches um eine Drehachse drehbar gelagert an der vorderen Radaufhängung 122 angeordnet ist. Die Drehachse verläuft dabei zumindest näherungsweise senkrecht zu einer Fahrtrichtung des Fahrzeugs 112 bei einer Geradeausfahrt. Ferner umfasst der Rahmen 118 ein mit der vorderen Radaufhängung 122 verbundenen Lenker 126, welcher um eine Lenkachse drehbar gelagert ist und eine Drehbewegung über die vordere Radaufhängung 122 auf das Vorderrad 124 zum Lenken des Fahrzeugs 112 überträgt. Insbesondere ist die Lenkachse zumindest näherungsweise senkrecht zu der Drehachse des Vorderrads 124 ausgerichtet.

An der Rückseite 116 ist eine hintere Radaufhängung 132 vorgesehen, an welcher beispielsweise zwei Hinterräder 134, von welchen in der Fig. 2 nur eins sichtbar dargestellt ist, um eine hintere Drehachse drehbar gelagert angeordnet sind. Bei Varianten des Ausführungsbeispiels und beispielsweise bei üblichen Fahrrädern ist nur ein Hinterrad 134 vorgesehen. Insbesondere ist die hintere Drehachse zumindest näherungsweise parallel zu der vorderen Drehachse ausgerichtet.

Die Räder 124, 134 umfassen jeweils eine Nabe und eine Felge, welche, insbesondere durch eine Vielzahl von Speichen, miteinander verbunden sind. Auf die Felge ist ein Reifen aufgezogen. Die Räder 124, 134 sind entsprechend dem Leichtgewichtfahrzeug in Leichtbauweise ausgebildet. So ist eine kleine Nabe vorgesehen, welche im Wesentlichen lediglich ein Gehäuse für ein Lager einer Radachse für die Drehung um die Drehachse ausbildet und die Speichen sind insbesondere drahtartige und für das Leichtbaurad ausreichend stabile Speichen. Beispielsweise weisen diese Speichen im Wesentlichen senkrecht zu ihrer Längserstreckung von der Nabe zu der Felge einen Durchmesser zwischen 1 mm und 10 mm, beispielsweise zwischen 1 mm und 5 mm auf.

Die Nabe bei solch einem Rad 124, 134 hat quer zur Drehachse einen kleinen Durchmesser, so dass ein an dem Rad 124, 134 angeordneter Bremsring radial außerhalb der Nabe um diese herum verläuft. Insbesondere ist ein solcher Bremsring an der Nabe selbst angeordnet, da die Speichen zwar zum Verbinden der Nabe mit der Felge stabil genug ausgebildet sind jedoch zu schwach ausgebildet sind um noch einen Bremsring zu tragen. Der Bremsring ist beispielsweise als Teil einer Bremsscheibe oder bei Varianten mittels Stegen oder einer anderen Befestigungsvorrichtung direkt an der Nabe angeordnet.

Außerdem weist das Fahrzeug 112, insbesondere ein Fahrrad, einen an dem Rahmen 118 angeordneten Sattel für einen Fahrer auf.

Außerdem ist noch ein im Ganzen mit 146 bezeichnetes Antriebssystem für das Fahrzeug 112 vorgesehen, welches insbesondere ein muskelangetriebenes Antriebssystem zumindest umfasst. Beispielsweise umfasst das Antriebssystem 146 Pedale, welche drehbar gelagert sind, und eine Drehbewegung derselben wird mittels eines Übertragungsmittels, insbesondere einer Kette, auf die Hinterräder 134 oder das Hinterrad 134 übertragen.

Bei Varianten des Fahrzeugs 112 umfasst das Antriebssystem 146 ergänzend oder alternativ einen Kleinmotor mit kleiner Leistung, insbesondere einen Elektromotor, zum Antrieb des Fahrzeugs 112.

Bei dem Lastenfahrrad ist ferner eine Lastentransportvorrichtung 152 an den Rahmen 118 angeordnet oder von diesem ausgebildet. Beispielsweise ist die Lastentransportvorrichtung 152 ein einen Lastenaufnahmeraum umgreifender Korb oder Kiste und bei anderen Varianten umfasst die Lastentransportvorrichtung 152 Taschen für die Lasten. Bei diesem Ausführungsbeispiel ist die Lastentransportvorrichtung 152 an der Rückseite 116, insbesondere zwischen den beiden Hinterrädern 134 angeordnet, wobei bei anderen Lastenleichtgewichtfahrzeugen die Lastentransportvorrichtung 152 an der Vorderseite 114 angeordnet ist.

Günstig ist es, insbesondere bei zweirädrigen Fahrzeugen 112, wenn dieses noch eine im Ganzen mit 156 bezeichnete Stützvorrichtung aufweist, welche in einer Stützstellung das Fahrzeug 112 stützt, so dass dieses nicht umkippt. Insbesondere weist die Stützvorrichtung 156 auch eine Fahrstellung auf, in welcher diese den Boden nicht berührt und das Fahren des Fahrzeugs 112 nicht beeinträchtigt. Vorzugsweise ist die Stützvorrichtung 156 zwischen der Stützstellung und der Fahrstellung verschwenkbar. Insbesondere umfasst die Stützvorrichtung 156 einen schwenkbar an dem Rahmen 118 angeordneten Stützarm 158, welcher sich in der Stützstellung auf einem Boden, auf welchem das Fahrzeug 112 abgestellt ist, abstützt und so ein Umkippen des Fahrzeugs verhindert. Bei einigen Varianten ist die Stützvorrichtung 156, insbesondere das an dem Boden sich abstützende Ende des Stützarms 158, mit einem oder zwei Rädern versehen.

Das Bremssystem 100 umfasst eine Feststellbremsvorrichtung 210, welche von einer Bremsvorrichtung 212 und einer mechanischen Beaufschlagungsvorrichtung 214 gebildet wird und eine hydraulische Beaufschlagungsvorrichtung 216 zumindest als Teil einer hydraulischen Lösevorrichtung 218 umfasst.

Insbesondere umfasst das Bremssystem 100 auch eine Gebereinheit 222 eines im Ganzen mit 224 bezeichneten Hydrauliksystems, von welchem die hydraulische Beaufschlagungsvorrichtung 216 auch ein Teil ist. Die Gebereinheit 222 ist ausgebildet, um über das Hydrauliksystem 224 die hydraulische Beaufschlagungsvorrichtung 216 mit einem druckbeaufschlagten Hydraulikmedium zu versorgen und ist insbesondere auch zur Aufnahme von aus der hydraulischen Beaufschlagungsvorrichtung 216 verdrängtem Hydraulikmedium ausgebildet. Hierzu ist die Gebereinheit 222 und die hydraulische Beaufschlagungsvorrichtung 216 mit einer Hydraulikleitung 226 verbunden. Insbesondere ist das Hydraulikmedium ein flüssiges Hydraulikmedium, insbesondere ein Öl oder Bremsflüssigkeit.

Die Gebereinheit 222 ist bei diesem Ausführungsbeispiel als handbetätigte Gebereinheit ausgebildet, welche zur Betätigung einen Hebel aufweist und an dem Lenker 226 angeordnet ist. Bei Varianten werden anderweitig betätigte Gebereinheiten 222 verwendet, insbesondere eine fußbetätigte Gebereinheit.

Vorzugsweise weist die Gebereinheit 222 auch einen Ausgleichsbehälter 228 auf. Der Ausgleichsbehälter 228 dient als Reservoir für das Hydraulikmedium, um beispielsweise Schwankungen in dem Volumen von Hydraulikmedium, welches in den an die Gebereinheit 222 angeschlossenen Hydraulikmediumverbrauchern, insbesondere in der hydraulischen Beaufschlagungsvorrichtung 216, in unterschiedlichen Zuständen genutzt und damit vorhanden ist. Des Weiteren ist vorzugsweise der Ausgleichsbehälter 228 vorgesehen als Vorratsbehälter für Hydraulikmedium, um an undichten Stellen des Hydrauliksystems 224 verlorengegangenes Hydraulikmedium zu ersetzen oder um einen Verschleiß der Bremsbeläge oder Temperaturschwankungen auszugleichen.

Ferner umfasst das Bremssystem 100 vorzugsweise noch eine Betriebsbremse 242, welche insbesondere eine hydraulische Betriebsbremse ist und an das Hydrauliksystem 224 und damit an die Gebereinheit 222 zur Versorgung mit druckbeaufschlagtem Hydraulikmedium angeschlossen ist. Dabei ist die Betriebsbremse 242 vorgesehen, um während der Fahrt mit dem Fahrzeug 112, also bei einem Fortbewegen desselben, bremsend einzuwirken. Die bremsende Einwirkung umfasst dabei insbesondere eine Geschwindigkeitsreduktion auf eine geringere Geschwindigkeit und auch ein Stoppen der Bewegung des Fahrzeugs 112, das heißt das Entschleunigen des Fahrzeugs 112 aus einer Bewegung in einen nicht bewegten Zustand.

Die Betriebsbremse 242 umfasst hierfür eine Betriebsbremsenvorrichtung 244, mittels welcher bremsend auf ein Rad 124, 134 des Fahrzeugs 112 eingewirkt werden kann. Insbesondere umfasst das Rad einen Bremsring auf welchen die Betriebsbremsenvorrichtung 244 mit Bremsbacken 246 bei einer Beaufschlagung bremsend einwirkt, so dass bei diesem Ausführungsbeispiel die Betriebsbremse 242 als Scheibenbremse ausgebildet ist.

Zur Beaufschlagung der Betriebsbremsenvorrichtung 244 umfasst die Betriebsbremse eine im Ganzen mit 252 bezeichnete Beaufschlagungsvorrichtung mit einem Beaufschlagungselement 254, welches in einem Beaufschlagungszustand die Betriebsbremsenvorrichtung 244 beaufschlagt und deren Bremswirkung auslöst. Insbesondere ist die Beaufschlagungsvorrichtung 252 der Betriebsbremse 242 als hydraulische Beaufschlagungsvorrichtung ausgebildet und an das Hydrauliksystem 224 und damit an die Gebereinheit 222 angeschlossen. Damit wird die Betriebsbremse 242 von der Gebereinheit 222 mit druckbeaufschlagtem Hydraulikmedium versorgt und insbesondere in einem nicht beaufschlagenden Zustand der Betriebsbremse 242 kann nicht mehr gebrauchtes Hydraulikmedium aus deren Beaufschlagungsvorrichtung 252 über das Hydrauliksystem 224 entweichen.

Hierbei ist vorzugsweise das Beaufschlagungselement 254 ein in einem Gehäuse der Betriebsbremse 242 beweglich gelagerter Kolben. Die hydraulische Beaufschlagungsvorrichtung 252 umfasst ferner eine hydraulische Druckkammer 256, welche zumindest teilweise von dem Beaufschlagungselement 254 begrenzt wird und an die Gebereinheit 222 fluidführend verbunden ist.

Bei Betätigung der Gebereinheit 222 gelangt druckbeaufschlagtes Hydraulikmedium in die hydraulische Druckkammer 256 und das Beaufschlagungselement 254 wird beaufschlagt und in einen die Betriebsbremsenvorrichtung 244 beaufschlagenden Zustand versetzt. Ein Ende der Betätigung der Gebereinheit 222 bewirkt eine Druckreduktion in derselben und das druckbeaufschlagte Hydraulikmedium in der hydraulischen Druckkammer 256 entweicht aus dieser in Richtung zur Gebereinheit 222. Dadurch, insbesondere mit Unterstützung durch ein Vorspannungselement 258, wird das Beaufschlagungselement 254 wieder in eine Grundposition desselben versetzt, in welcher dieses die Betriebsbremsenvorrichtung 244 nicht beaufschlagt und somit eine Bremswirkung der Betriebsbremse 242 endet.

Beispielsweise ist das Vorspannungselement 258 ein Federelement, welches das insbesondere als Kolben ausgebildete Beaufschlagungselement 254 beaufschlagt. Insbesondere ist vorgesehen, dass das Vorspannungselement 258 unter Vorspannung das Beaufschlagungselement 254 in Richtung von dessen Grundposition beaufschlagt.

Somit weist die Betriebsbremse 242 eine Grundposition auf, in welcher sie nicht bremsend auf das Rad 142, 134 einwirkt und solange eine Betätigung der Betriebsbremse 242 erfolgt, wird sie in einen Bremszustand versetzt, in welchem sie bremsend auf das Rad 124, 134 einwirkt.

Das Bremssystem 100 umfasst insbesondere ein Gehäuse 302 für die mechanische und hydraulische Beaufschlagungsvorrichtungen 214, 216 und die Bremsvorrichtung 212, wobei diese zumindest größtenteils in oder an dem Gehäuse angeordnet sind.

Insbesondere ist in dem Gehäuse 302 eine Beaufschlagungsachse 306 definiert, entlang welcher insbesondere die Bremsvorrichtung 212 und die mechanische Beaufschlagungsvorrichtung 214 und beispielsweise auch die hydraulische Beaufschlagungsvorrichtung 216 zumindest teilweise angeordnet sind.

Die Bremsvorrichtung 212 umfasst zwei Bremsbackeneinheiten 312, 314, welche zwischen ihnen einen Bremsaufnahmeraum 316 definieren. Die beiden Bremsbackeneinheiten 312, 314 sind relativ zueinander beweglich angeordnet, so dass der Bremsaufnahmeraum 316 durch eine Bewegung der Bremsbackeneinheiten 312, 314 relativ zueinander in seiner Größe veränderbar ist. In einem Bremszustand der Bremsvorrichtung 212 ist der Bremsaufnahmeraum kleiner als in einem Lösezustand derselben.

Insbesondere ist vorgesehen, dass bei dem Fahrzeug 112 mit dem Bremssystem 100 der Bremsring eines der Räder 124, 134 mit einem Abschnitt in dem Bremsaufnahmeraum 316 angeordnet ist und bei einer Drehbewegung des Rads rotatorisch durch den Bremsaufnahmeraum 316 hindurch verläuft. Die rotatorische Bewegung des Bremsrings ist in dem Lösezustand aufgrund des größeren Bremsaufnahmeraums 316 ungehindert, wobei in dem Bremszustand durch die verkleinerte Größe des Bremsaufnahmeraums 316 die Bremsbackeneinheit 312, 314 auf den Bremsring bremsend einwirken, insbesondere diesen beaufschlagen, und somit insbesondere eine rotatorische Bewegung des Bremsrings und damit auch des Rads 134, 124 im Wesentlichen verhindern.

An ihren den Bremsaufnahmeraum 316 zugewandten Seiten weisen die Bremsbackeneinheiten 312, 314 Bremsbeläge auf für die Beaufschlagung des Bremsrings in dem Bremszustand. Beispielsweise werden die Bremsbeläge 322, 324 mechanisch gehalten oder magnetisch gehalten.

Vorzugsweise weist zumindest eine der Bremsbackeneinheiten, beispielsweise die Bremsbackeneinheit 312, eine Verschleißnachstelleinrichtung 332 auf, mit welcher der Bremsbelag 322 der Bremsbackeneinheit 312 bei Verschleiß desselben relativ zu der anderen Bremsbackeneinheit, hier der Bremsbackeneinheit 314, nachjustiert werden kann und somit der Bremsaufnahmeraum 316, insbesondere in dem Lösezustand und in dem Bremszustand, eine definierte Größe aufweist, also insbesondere die Bremsbeläge 322, 324 in den entsprechenden Zuständen einen definierten Abstand zueinander aufweisen.

Hierfür ist beispielsweise bei der Bremsbackeneinheit 312 eine Halterung 334 vorgesehen und der Bremsbelag 322 ist relativ zu der Halterung 334 beweglich an einer Verschiebeeinrichtung 336 angeordnet. Die Verschiebeeinrichtung 336 ist relativ zu der Halterung 334 verschiebbar und feststellbar an der Halterung 334 angeordnet und umfasst hierfür insbesondere eine Stellschraube 338. Die Verschiebung erfolgt insbesondere entlang der Beaufschlagungsachse 306. Somit kann der Bremsbelag 322 dieser Bremsbackeneinheit 112 mittels der Verschiebeeinrichtung 336 insbesondere entlang der Beaufschlagungsachse 306 in seiner Position eingestellt und festgestellt werden, so dass bei einem Verschleiß eines der Bremsbeläge dieser wieder in einen definierten Abstand zu dem anderen Bremsbelag 324 versetzt werden kann.

Insbesondere sind die Bremsbackeneinheiten 312, 314 an einer Bremsseite 342 des Gehäuses angeordnet und beispielsweise an dieser Bremsseite 342 außerhalb des Gehäuses an dieses angeordnet. Hierfür ist die Halterung 334 an der Bremsseite 342 angeordnet und übergreift die andere Bremsbackeneinheit 314, welche anliegend an der Bremsseite 342 angeordnet ist. Beispielsweise ist die Halterung 334 mit Schrauben an das Gehäuse 302 angeschraubt.

Ferner umfasst die Bremsvorrichtung 212 einen Beaufschlagungskolben 352, welcher in Abhängigkeit einer Orientierung einer Beaufschlagung desselben die Bremsvorrichtung 212 durch ein Versetzen der Position der Bremsbackeneinheiten 312, 314 in zumindest den einen Bremszustand und den zumindest einen Lösezustand versetzt. Hierzu ist die Bremsbackeneinheit 314 beaufschlagungswirksam an den Beaufschlagungskolben 352 gekoppelt, wobei bei diesem Ausführungsbeispiel der Bremsbelag 324 dieser Bremsbackeneinheit 314 an einer Frontseite 354 des Beaufschlagungskolbens 352 angeordnet ist, beispielsweise magnetisch gehalten ist.

Das Gehäuse 302 weist einen Kolbenführungsraum 362 auf, welcher sich länglich entlang der Beaufschlagungsachse 306 erstreckt und beispielsweise als Bohrung 302 ausgebildet ist. In dem Kolbenführungsraum 362 ist der Beaufschlagungskolben 352 linear entlang der Beaufschlagungsachse 306 beweglich gelagert angeordnet.

Hierfür umfasst der Beaufschlagungskolben 362 beispielsweise ein Führungsteil 364, dessen Führungsaußenflächen 366 an Kolbenführungsflächen 368 des Gehäuses 302, welche den Kolbenführungsraum 362 begrenzen, gleitend anliegend angeordnet sind.

Die Kolbenführungsflächen 368 erstrecken sich in zur Beaufschlagungsachse 306 axialer Richtung zwischen zwei axialen Endbereichen 372, 374 des Kolbenführungsraums 362. Insbesondere ist einer der axialen Endbereiche, beispielsweise der Endbereich 372, an der Bremsseite 342 angeordnet und der andere axiale Endbereich 374 in zur Beaufschlagungsachse 306 axialer Richtung gegenüberliegend angeordnet und der dazwischenliegende Raum bildet den Kolbenführungsraum 362 aus.

An dem der Bremsseite 342 gegenüberliegend angeordneten axialen Endbereich 374 ist beispielsweise eine Öffnung in dem Gehäuse 302 vorgesehen, welche durch ein Verschlusselement 378 verschlossen ist.

Damit ist der Kolbenführungsraum 362 als sich zylindrisch zur Beaufschlagungsachse 306 ausgebildeter Raum ausgebildet, bei welchem die diesen koaxial zur Beaufschlagungsachse 306 begrenzenden Mantelflächen zumindest teilweise die Kolbenführungsflächen 368 ausbilden und sich vorzugsweise von dem an der Bremsseite 342 angeordneten axialen Endbereich 372 hinweg erstrecken. Bei Varianten kann die Detailrealisierung eines solchen zylindrischen Kolbenführungsraums auch anders als voranstehend ausgebildet werden.

Zur Beaufschlagung der Bremsbackeneinheit 314 weist der Beaufschlagungskolben 352 ein Beaufschlagungsteil 382 auf, welches bei diesem Ausführungsbeispiel die Frontseite 354, an welche die Bremsbackeneinheit 314 beaufschlagungswirksam angeordnet ist, aufweist. Hierfür ist insbesondere ein Durchbruch 384 an der Bremsseite 342 des Gehäuses 302 vorgesehen, durch welches das Beaufschlagungsteil 382 aus dem Kolbenführungsraum 362 hindurchgreift und an dessen herausgreifenden Bereich die Bremsbackeneinheit 314 angekoppelt ist, insbesondere angeordnet ist. Hier ist somit die Frontseite 354 des Beaufschlagungskolbens 352 außerhalb des Kolbenführungsraums 362 angeordnet.

Das Beaufschlagungsteil 382 und das Führungsteil 364 sind insbesondere mittels eines Verbindungsteils 386 des Beaufschlagungskolbens 352 miteinander verbunden.

Ferner weist der Beaufschlagungskolben 352 einen vorderen axialen Anschlag 388 auf, insbesondere an dem Verbindungsteil 386. Bei einer Beaufschlagung des Beaufschlagungskolbens in Richtung des Bremszustands wirkt der vordere axiale Anschlag 388 in einer Bremsendstellung mit einer Gehäusewand 392 des Gehäuses 302 zusammen und eine weitere Bewegung des Beaufschlagungskolbens 352 in diese Beaufschlagungsrichtung ist verhindert. Insbesondere ist die Gehäusewand 392 die den axialen Endbereich 372 in axialer Richtung begrenzende Gehäusewand, welche den Durchbruch 384 aufweist.

Ferner weist der Beaufschlagungskolben 352 einen hinteren axialen Anschlag 394 auf. Bei einer Beaufschlagung in Richtung des Lösezustands wirkt der hintere axiale Anschlag 394 in einer Löseendstellung mit dem Gehäuse 302, insbesondere in dem der Bremsseite 342 gegenüberliegenden axialen Endbereich 374, zusammen und eine weitere Bewegung des Beaufschlagungskolbens 352 in diese in Richtung des Lösezustands gerichtete Richtung ist verhindert. Bei diesem Ausführungsbeispiel wirkt der hintere axiale Anschlag 394 mit dem Verschlusselement 378 zusammen, jedoch wirken bei Varianten des Ausführungsbeispiels andere Teile des Gehäuses 302, beispielsweise eine den Kolbenführungsraum 362 begrenzende Gehäusewand, mit dem hinteren axialen Anschlag 394 zusammen.

Insbesondere ist der hintere axiale Anschlag 394 an einem dem Beaufschlagungsteil 382 und der Frontseite 354 gegenüberliegenden Seite angeordnet. Vorzugsweise erstreckt sich das den hinteren axialen Anschlag 394 aufweisende Teil von dem Führungsteil 364 hinweg beispielsweise bis zu einer den axialen Anschlag 394 ausbildenden axialen Endseite des Beaufschlagungskolbens 352.

Vorzugsweise ist der Beaufschlagungskolben 352 als einteiliger Körper ausgebildet, wobei dessen Teile, insbesondere das Führungsteil 364, das Beaufschlagungsteil 382 und das Verbindungsteil 386, einzelne axiale Abschnitte dieses einteiligen Körpers sind. Vorzugsweise weisen dabei die einzelnen Teile 364, 382, 386 unterschiedliche radiale Ausdehnungen von einer Kolbenachse 396, welche insbesondere im Wesentlichen mit der Beaufschlagungsachse 306 zusammenfällt, auf.

Hier ist die radiale Ausdehnung des Beaufschlagungsteils 382 kleiner als die radiale Ausdehnung des Führungsteils 364. Insbesondere weist der Beaufschlagungskolben 352 im Bereich der Kolbenführungsflächen 368 seine größte radiale Ausdehnung auf. Insbesondere ist auch bei dem Verbindungsteil 386 eine Änderung der radialen Ausdehnung des Beaufschlagungskolbens 352 vorgesehen und der vordere axiale Anschlag 388 ist als eine Stufe 398 an dem Kolben ausgebildet.

Die mechanische Beaufschlagungsvorrichtung 214 ist relativ zu der Bremsvorrichtung 212 derart angeordnet, dass die mechanische Beaufschlagungsvorrichtung 214 die Bremsvorrichtung 212, insbesondere den Beaufschlagungskolben 352, in Richtung des Bremszustands beaufschlagend angeordnet ist.

Somit beaufschlagt die mechanische Beaufschlagungsvorrichtung 214 den Beaufschlagungskolben 352 in zur Beaufschlagungsachse 306 linearer Richtung in Richtung der Bremsendstellung.

Hierfür ist bei diesem Ausführungsbeispiel die mechanische Beaufschlagungsvorrichtung 214 unter Vorspannung in dem Kolbenführungsraum 362 angeordnet.

Die Vorspannung ist derart ausgelegt, dass durch diese der Beaufschlagungskolben 352 bis in die Bremsendstellung versetzt wird, sofern bis zum Erreichen dieser Bremsendstellung keine entgegenwirkende Kraft, beispielsweise durch die hydraulische Beaufschlagungsvorrichtung 216 und/oder durch einen zwischen den Bremsbackeneinheiten 312, 314 eingepressten Bremsring, auf den Beaufschlagungskolben 350 einwirkt und eine weitere Bewegung des Beaufschlagungskolbens 352 verhindert.

Die mechanische Beaufschlagungsvorrichtung 214 stützt sich zum Einen an einer ersten Beaufschlagungsfläche 412 des Beaufschlagungskolbens 352 ab und zum Anderen an einem Abstützelement 414 des Gehäuses 302 ab. Vorzugsweise ist das Abstützelement 414 in dem der Bremsseite 342 gegenüberliegenden axialen Endbereich 374 angeordnet und begrenzt auch den Kolbenführungsraum 362. Bei diesem Ausführungsbeispiel ist das Abstützelement 414 das Verschlusselement 378, wohingegen bei Varianten des Ausführungsbeispiels das Abstützelement 414 durch eine Gehäusewand gebildet wird.

Die erste Beaufschlagungsfläche 412 verläuft im Wesentlichen senkrecht zu der Kolbenachse 396 und der Beaufschlagungsachse 306 und ist an einer dem Beaufschlagungsteil 382 abgewendeten Seite des Beaufschlagungskolbens 352 angeordnet, beispielsweise an dem Führungsteil 364. Insbesondere weist der Beaufschlagungskolben 352 im Bereich der ersten Beaufschlagungsfläche 412 eine Änderung seiner radialen Ausdehnung auf und an der damit verbundenen Stufe ist die erste Beaufschlagungsfläche 412 ausgebildet.

Insbesondere umfasst die mechanische Beaufschlagungsvorrichtung 214 ein Federelement 422, welches in dem axialen Endbereich 374 des Kolbenführungsraums 362 zwischen dem Abstützelement 414 und der ersten Beaufschlagungsfläche 412 unter Vorspannung angeordnet ist.

Beispielsweise ist das Federelement 422 radial außerhalb eines Teils des Beaufschlagungskolbens 352 angeordnet und umgibt diesen somit, wobei insbesondere der von dem Federelement 422 umgebene Teil der sich von dem Führungsteil 364 bis zu dem hinteren Axialanschlag 394 erstreckende Teil des Beaufschlagungskolbens 352 ist.

Durch die Beaufschlagung der Bremsvorrichtung 212 durch die mechanische Beaufschlagungsvorrichtung 214 in Richtung des Bremszustands bilden diese somit die Feststellbremsvorrichtung 210 aus.

Die hydraulische Beaufschlagungsvorrichtung 216 umfasst eine hydraulische Druckkammer 512 in dem Kolbenführungsraum 362, welche zumindest teilweise von dem Beaufschlagungskolben 352 begrenzt wird und über Fluidkanäle 516 in dem Gehäuse 302 mit einem Hydraulikanschluss 518 fluidführend verbunden ist und über diesen mit der Hydraulikleitung 526 und mit der Gebereinheit 222 fluidführend verbindbar und/oder verbunden ist.

Die Druckkammer 512 erstreckt sich insbesondere in dem bremsseitigen axialen Endbereich 372 zwischen der diesen begrenzenden Gehäusewand 392 in zur Beaufschlagungsachse 306 axialer Richtung bis zu einer zweiten Beaufschlagungsfläche 522 des Beaufschlagungskolbens 352.

Somit ist die Druckkammer 512 bezüglich ihres Volumens größenvariabel ausgebildet, insbesondere in zur Beaufschlagungsachse 306 axialer Richtung längenvariabel ausgebildet, und zwar in Abhängigkeit von einer Stellung des Beaufschlagungskolbens 352. Dabei nimmt die hydraulische Druckkammer 512 in dem Bremszustand ein kleineres Volumen ein als in dem Lösezustand. Bei diesem Ausführungsbeispiel rührt dies daher, dass in dem Bremszustand der Beaufschlagungskolben 352 näher an der Bremsseite 342 angeordnet ist als in dem Lösezustand und damit eine axiale Erstreckung der Druckkammer 512 zwischen der Gehäusewand 392 und der zweiten Beaufschlagungsfläche 522 in dem Bremszustand kleiner ist als in dem Lösezustand.

Die zweite Beaufschlagungsfläche 522 verläuft im Wesentlichen senkrecht zu der Beaufschlagungsachse 306 und ist in entgegengesetzter Richtung zu der ersten Beaufschlagungsfläche 412 ausgebildet. Insbesondere bilden einander abgewendete Seiten des Führungsteils 364 jeweils eine der ersten und zweiten Beaufschlagungsflächen 412, 522 aus.

Die Druckkammer 512 erstreckt sich entlang des Beaufschlagungskolbens 352 und an axialen Enden derselben sind Dichtungen 526 und 528 zwischen dem Beaufschlagungskolben 352 und dem Gehäuse 302 zur Abdichtung der Drucckammer 512 angeordnet. Insbesondere weist hierfür der Beaufschlagungskolben 352 Nuten 532 und 534 auf, welche jeweils an einer jeweiligen Außenseite des Beaufschlagungskolbens 352 in sich geschlossen um die Kolbenachse 396 herum verlaufen und die Dichtungen 526 und 528 teilweise aufnehmen. Beispielsweise verläuft die Nut 534 in Umlaufrichtung um das Beaufschlagungsteil 382 herum und die darin angeordnete Dichtung 528 dichtet zwischen diesem und der Gehäusewand 392 in dem Durchbruch 384 ab. Ferner ist vorzugsweise vorgesehen, dass die Nut 532 umfangseitig um das Führungsteil 364 herum verläuft und die darin angeordnete Dichtung 526 dichtet zwischen dem Führungsteil 364 und dem Gehäuse 312, insbesondere den Kolbenführungsflächen 368, ab.

Als Dichtungen 526, 528 sind insbesondere Dichtungsringe, beispielsweise O-Ringe beziehungsweise X-Ringe vorgesehen.

Im bremsseitigen axialen Endbereich 372 ist eine Mündungsöffnung 538 eines Fluidkanals 516 in die Druckkammer 512 vorgesehen. Dabei ist die Mündungsöffnung 538 derart angeordnet, dass diese auch bei einem Minimalvolumen der hydraulischen Druckkammer 512 in dem Bremszustand noch geöffnet in die Druckkammer 512 mündet und insbesondere der Beaufschlagungskolben 352 in der Bremsendstellung entfernt von der Mündungsöffnung 538 und diese nicht verschließend angeordnet ist. Bei diesem Ausführungsbeispiel ist die Mündungsöffnung 538 an einer den Kolbenführungsraum 362 begrenzenden radialen Mantelfläche zwischen der Kolbenführungsfläche 368 und der axialen Stirnseite des Kolbenführungsraums 362 angeordnet. Bei Varianten ist vorgesehen, dass die Mündungsöffnung 538 an der axialen Stirnseite des Kolbenführungsraums 362 in diesen mündet.

Zur Steuerung eines Flusses des Hydraulikmediums und zur Ausbildung der hydraulischen Beaufschlagungsvorrichtung 216 zur hydraulischen Lösevorrichtung 218 umfassen diese als Teil des Hydrauliksystems 224 eine im Ganzen mit 550 bezeichnete Ventilsteuerung.

Hierfür umfasst die Ventilsteuerung 550 ein Zuführventil 552 und ein Freigabeventil 554 welche bei diesem Ausführungsbeispiel gemeinsam durch ein im Ganzen mit 558 bezeichnetes Rückschlagventil ausgebildet sind. Bei Varianten des Ausführungsbeispiels sind das Zuführventil 552 und das Freigabeventil 554 als zwei separate Ventile ausgebildet.

Das Zuführventil 552 weist einen Öffnungszustand und einen Sperrzustand auf, wobei in dem Öffnungszustand ein Durchfluss von Hydraulikmedium in einer von der Gebereinheit 222 zur hydraulischen Druckkammer 512 orientierten Freigaberichtung freigegeben ist und in dem Sperrzustand kein Durchfluss von Hydraulikmedium durch das Zuführventil 552 möglich ist.

Das Freigabeventil 554 weist einen Freigabezustand und einen Schließzustand auf, wobei in dem Freigabezustand das Freigabeventil 554 einen Abfluss von Hydraulikmedium aus der hydraulischen Druckkammer 512 freigibt und in dem Schließzustand das Freigabeventil gegenüber dem in der Druckkammer 512 vorhandenen Hydraulikmedium die Druckkammer 512 fluidabdichtend schließt.

Bei diesem Ausführungsbeispiel sind das Zuführventil 552 und das Freigabeventil 554 in einem Ventilraum 562 des Gehäuses 302 angeordnet, wobei der Ventilraum 562 auf der einen Seite über einen Fluidkanal 516 mit der hydraulischen Druckkammer 512 fluidführend verbunden ist und auf einer anderen Seite der Ventile 552, 554 beispielsweise über einen weiteren Fluidkanal mit dem Hydraulikanschluss 518 fluidführend verbunden ist.

Das Rückschlagventil 558, welches das sowohl das Zuführventil 552 als auch das Freigabeventil 554 ausbildet, umfasst eine Ventilfeder 568, welche einen Körper, welcher einen Ventilkörper 572 des Zuführventils 552 und auch einen Schließkörper 574 des Freigabeventils 554 ausbildet, beaufschlagt und zwar in Richtung eines Ventilsitzes 576.

Der Ventilkörper 572 bzw. Schließkörper 574 ist in Richtung der Beaufschlagungsrichtung der Ventilfeder 568 linear beweglich in dem Ventilraum 562 gelagert und hier als Kugelkörper ausgebildet.

Der Ventilsitz 576 ist bei diesem Ausführungsbeispiel an einer Einmündung eines Verbindungskanals 578 in den Ventilraum 562 angeordnet. Der Verbindungskanal 578 verbindet als Fluidkanal den Ventilraum 562 mit dem Hydraulikanschluss 518 fluidführend.

An dem Ventilsitz 576 ist eine Dichtung 582 vorgesehen, an welche der Ventilkörper 572 und der Schließkörper 574 in dem Sperrzustand beziehungsweise dem Schließzustand druckbeaufschlagt und das Ventil 552, 554, 558 fluidabdichtend anliegt.

Die Dichtung 582 ist dabei die Einmündung des Verbindungskanals 578 vollständig umgebend ausgebildet.

Dabei erfolgt bei diesem Ausführungsbeispiel die Druckbeaufschlagung zur Fluidabdichtung teilweise durch die Ventilfeder 568 sowie größtenteils durch einen Überdruck des in der Druckkammer 256 druckbeaufschlagt eingeführten Hydraulikmediums gegenüber einem niedrigeren Druck des hydraulikanschlussseitig vorhandenem Hydraulikmediums.

Insbesondere ist die Stärke der Ventilfeder 568 derart ausgelegt, dass diese schwächer ist als eine Kraft auf den Ventilkörper 572, welche von von der Gebereinheit 222 druckbeaufschlagt bereitgestelltes Hydraulikmedium ausgeübt wird. Somit kann von der Gebereinheit 222 bereitgestelltes druckbeaufschlagtes Hydraulikmedium das Rückschlagventil 558 öffnen und das Zuführventil 552 in den Öffnungszustand versetzen und dabei druckbeaufschlagtes Hydraulikmedium der Druckkammer 512 zuführen. Bei einem Ende der Betätigung der Gebereinheit 222 sinkt der Druck des Hydraulikmediums in der Hydraulikleitung 226 und folglich des hydraulikanschlussseitig das Ventil 552, 554, 558 beaufschlagenden Hydraulikmediums und das druckbeaufschlagte Hydraulikmedium in der Druckkammer 512 schließt selbsttätig über den Ventilraum 562 das Ventil 552, 554, 558 durch Beaufschlagung des Ventilkörpers 572/Schließkörpers 574.

Zum Öffnen des Rückschlagventils 558, also zum Versetzen des Freigabeventils 554 in den Freigabezustand ist eine im Ganzen mit 586 bezeichnete Freigabeeinrichtung vorgesehen, welche insbesondere mechanisch betätigbar ist, beispielsweise mittels eines Bowdenzugs 588.

In einer Grundstellung der Freigabeeinrichtung 586 interagiert diese im Wesentlichen nicht mit dem Rückschlagventil 558 beziehungsweise dem Freigabeventil 554, wohingegen bei einer Betätigung der Freigabeeinrichtung 586 diese in eine Betätigungsstellung versetzt wird, in welcher die Freigabeeinrichtung 586 auf das Ventil 554, 558 einwirkt und das Freigabeventil 554 in den Freigabezustand versetzt.

Vorzugsweise ist vorgesehen, dass die Freigabeeinrichtung 586 federbeaufschlagt ist und die Feder die Freigabeeinrichtung 586 in Richtung der Grundstellung beaufschlagt.

Hierfür umfasst die Freigabeeinrichtung 586 ein Aktivierungselement 592, welches bei diesem Ausführungsbeispiel in der Art einer Nockenwelle ausgebildet ist. Das wellenartige Aktivierungselement 592 ist um eine Aktivierungsachse 594 drehbar in dem Gehäuse 302 gelagert und mit einem Aktivierungsabschnitt 596 hydraulikanschlussseitig des Ventils 554, 558 beispielsweise in dem Verbindungskanal 578 angeordnet. Insbesondere ragt außerdem ein Angriffsabschnitt 598 des Aktivierungselements 592 aus dem Gehäuse 302 heraus, an welchen insbesondere der Bowdenzug 588 angreift und bei einer Betätigung desselben das Aktivierungselement 592 in eine Rotationsbewegung um die Aktivierungsachse 594 versetzt. Insbesondere ist dabei lediglich eine kleine Drehung des Aktivierungselements zur Betätigung vorgesehen, beispielsweise eine Drehung in einem Winkelbereich von höchstens 30°, vorzugsweise von höchstens 20° und beispielsweise eine Drehung um mindestens 5°.

Insbesondere ist zwischen dem Aktivierungsabschnitt 596 und dem Angriffsabschnitt 598 eine Dichtung 612 angeordnet, welche bei dem aus dem Verbindungskanal 578 herausragenden Angriffsabschnitt 598 das Hydrauliksystem 224, also hier den Verbindungskanal 578, fluidabdichtend verschließt. Außerdem erstreckt sich eine Bohrung, in welcher das Aktivierungselement 592 angeordnet ist, bei diesem Ausführungsbeispiel noch bis in den Kolbenführungsraum 362 und zwischen dem Verbindungskanal 578 und dem Kolbenführungsraum 362 ist eine weitere Dichtung 614 angeordnet, welche das Hydrauliksystem 224 gegenüber dem Kolbenführungsraum 362 abdichtet. Insbesondere sind die Dichtungen 612, 614 als Dichtungsringe, beispielsweise als O-Ringe oder X-Ringe, ausgebildet.

In dem Aktivierungsabschnitt 596 weist das Aktivierungselement 592 eine Aufnahme 622 für einen Stößel 624 auf. Der Stößel 624 ist in einer Ventildurchführung 626, welche in den Ventilsitz 576 mündet, angeordnet, wobei auf einer dem Ventilsitz 576 gegenüberliegenden Seite der Ventildurchführung 626 das Aktivierungselement 592 mit seiner Aufnahme 622 angeordnet ist. Insbesondere ist die Ventildurchführung 622 Teil des Verbindungskanals 578.

In der Grundstellung der Freigabeeinrichtung 586 ragt der Stößel 624 drucckammerseitig nicht über den Ventilsitz 576 hinaus, ist also zu dem Ventilsitz 576 zurückgesetzt angeordnet, so dass ein fluiddichtend abschließendes Anliegen des Ventilkörpers 572 bzw. des Schließkörpers 574 durch den Stößel 624 in der Grundstellung nicht beeinträchtigt wird. In dieser Grundstellung ist der Stößel 624 mit einem aufnahmeseitigen Ende desselben in der Aufnahme 622 aufgenommen.

Anliegend an die Aufnahme 622 weist das Aktivierungselement 592 einen Verdrängabschnitt 632 auf, welcher bei einer Drehung um die Aktivierungsachse 594 zur Betätigung der Freigabeeinrichtung 586 in Richtung auf den Stößel 624 bewegt wird und auf dessen aufnahmeseitiges Ende einwirkt, nämlich diesen in Richtung des Ventilsitzes 576 verdrängt. Durch dieses verdrängende Einwirken des Verdrängerabschnitts 632 wird also der Stößel 624 in Richtung des Ventilsitzes 576 und damit auch in Richtung des Ventilkörpers 572 beziehungsweise Schließkörpers 574 bewegt und ragt drucckammerseitig mit einem der Aufnahme 622 gegenüberliegenden Ende über den Ventilsitz 576 hinaus und versetzt somit den Ventilkörper 572 bzw. den Schließkörper 574 aus der fluidabdichtenden Stellung heraus und drückt diesen Körper 572, 574 räumlich entfernt weg von dem Ventilsitz 576, so dass das Rückschlagventil 558 öffnet und das Freigabeventil 554 in den Freigabezustand versetzt wird.

Insbesondere ist die Aufnahme 622 als Einkerbung in dem Aktivierungselement 592 ausgebildet, welche durch den Verdrängerabschnitt 632 begrenzt ist und in der Grundstellung der Ventildurchführung 626 zugewandt ist. Bei der Drehung zur Betätigung wird die die Aufnahme 622 ausbildende Einkerbung von der Ventildurchführung 626 weggedreht und der Verdrängerabschnitt 632 wird in eine der Ventildurchführung 626 zugewandte Stellung gedreht. Somit kann das aufnahmeseitige Ende des Stößels 624, welches aus der Ventildurchführung 626 aufnahmeseitig hinausragt, nicht mehr in der Aufnahme 622 aufgenommen werden sondern wird durch den Verdrängerabschnitt 632 in Richtung des Ventilsitzes 576 durch die Ventildurchführung 626 verdrängt.

Wird die Freigabeeinrichtung 586 nicht mehr betätigt, also insbesondere der Bowdenzug 588 gelöst, dreht sich das Aktivierungselement 592 durch die Federbeaufschlagung in Richtung der Grundstellung wieder zurück, so dass die Aufnahme 622 wieder der Ventildurchführung 626 zugewandt ist und das aufnahmeseitige Ende des Stößels 624 aufnehmen kann und der Stößel 624 damit wieder seine gegenüber dem Ventilsitz 576 zurückgesetzte Stellung einnimmt. Insbesondere wird das Zurückversetzen des Stößels 624 durch den kraftbeaufschlagten Ventilkörper 572, bzw. den kraftbeaufschlagten Schließkörper 574 unterstützt, wobei der Körper 572, 574 auf den Ventilsitz 576 zu kraftbeaufschlagt ist, beispielsweise durch die Ventilfeder und/oder das druckbeaufschlagte Hydraulikmedium in der Druckkammer 512.

Das Gehäuse 302 ist an dem Fahrzeug 112 an einer von dessen Radaufhängungen 122, 132 anordenbar und angeordnet, insbesondere an einem Ausfallende derselben. Dabei erfolgt die Anordnung des Gehäuses 302 derart, dass die Bremsbackeneinheiten 312, 314 relativ zu dem Bremsring eines der Räder 124, 134 derart angeordnet werden, dass der Bremsring mit einem Abschnitt durch den Bremsaufnahmeraum 316 verläuft und in dem Lösezustand die Bremsbackeneinheiten 312, 314 ein freies Rotieren des Bremsrings ermöglichend beabstandet zu diesem angeordnet sind und in dem Bremszustand die Bremsbackeneinheiten 312, 314 bremswirksam den Bremsring beaufschlagen und so im Wesentlichen ein Rotieren des Bremsrings und damit des Rads 124, 134 verhindern.

Zur sicheren Anordnung und genauen Ausrichtung des Gehäuses 302 mit der Bremsvorrichtung 212 ist vorzugsweise eine Justierungseinrichtung 670 an dem Gehäuse 302 vorgesehen.

Insbesondere umfasst die Justierungseinrichtung 670 zwei Flanschvorsprünge 672, 674, welche seitlich an dem Gehäuse 302 sich von diesem hinwegerstreckend ausgebildet sind. Vorzugsweise sind die Flanschvorsprünge 672, 674 an der Bremsseite 342 oder unmittelbar anschließend an diese an dem Gehäuse 302 angeordnet.

Die Flanschvorsprünge 672, 674 umfassen jeweils ein Langloch 676 und 678. Ein Befestigungsmittel, insbesondere eine Schraube, ist somit durch das jeweilige Langloch 676, 678 durchführbar zur Befestigung des Gehäuses 302. Das Befestigungsmittel greift bei einem an das Fahrzeug 112 angeordneten Gehäuse 302 durch das jeweilige Langloch 676, 678 und befestigt damit das Gehäuse 302 an dem Fahrzeug 112, insbesondere an einer der Radaufhängungen 122, 132. Durch die längliche Ausbildung der Langlöcher 676, 678 ist das Befestigungsmittel in einem noch nicht vollständig befestigten Zustand in einer Längsrichtung in dem jeweiligen Langloch 676, 678 verschiebbar und dadurch kann das Gehäuse 302 bei der Befestigung präzise relativ zu dem Bremsring ausgerichtet an das Fahrzeug 112 befestigt werden.

Kurz zusammengefasst funktioniert das Bremssystem 100 mit der Feststellbremsvorrichtung 210, welche von der Bremsvorrichtung 212 und der mechanischen Beaufschlagungsvorrichtung 214 gebildet wird, und der die hydraulische Lösevorrichtung 218 ausbildenden hydraulischen Beaufschlagungsvorrichtung 216 insbesondere wie folgt.

Die mechanische Beaufschlagungsvorrichtung 214 beaufschlagt den Beaufschlagungskolben 352 in Richtung des Bremszustands, in welchem der Beaufschlagungskolben 352 die Bremsbackeneinheiten 312, 314 beaufschlagt, wodurch der Bremsaufnahmeraum 316 verkleinert wird und ein in diesem angeordneter Abschnitt des Bremsrings zwischen den Bremsbackeneinheiten 312, 314 bremswirksam festgeklemmt ist. Die mechanische Beaufschlagungsvorrichtung 214 ist dabei unter Vorspannung montiert, so dass ohne entgegenwirkende Kräfte sie die Bremsvorrichtung 212 in den Bremszustand versetzt und somit die mechanische Feststellbremsvorrichtung 210 ausgebildet ist. Dabei ist die Feststellbremsvorrichtung 210 insbesondere vorgesehen, um bei einem stehenden Fahrzeug 112 ein Fortbewegen desselben zu verhindern und durch die mechanische Beaufschlagung durch die Beaufschlagungsvorrichtung 214 wird das Verharren des Fahrzeugs 112 in dieser Ruhestellung besonders günstig und sicherstellend erreicht.

Vorzugsweise ist dabei vorgesehen, dass die mechanische Beaufschlagungsvorrichtung 214 zur Beaufschlagung das Federelement 422 umfasst, welches zusammen mit dem Beaufschlagungskolben 352 in dem Kolbenführungsraum 362 des Gehäuses 302 angeordnet ist. Der Beaufschlagungskolben 352 ist in dem Kolbenführungsraum 362 in linearer Richtung axial zur Beaufschlagungsachse 306 beweglich gelagert. Das Federelement 422 stützt sich zum Einen am Gehäuse 302 und zum andern an der ersten Beaufschlagungsfläche 412 des Beaufschlagungskolbens 352 ab und ist in einem der Bremsseite 342 gegenüberliegenden axialen Endbereich 372 des Kolbenführungsraums 362 angeordnet.

Mit einem in zur Beaufschlagungsachse 306 dem Federelement 422 gegenüberliegend angeordneten Beaufschlagungsteil 382 beaufschlagt der Beaufschlagungskolben 352 in dem Bremszustand zumindest die Bremsbackeneinheit 314, so dass diese zusammen mit der anderen Bremsbackeneinheit 312 bremswirksam auf den Bremsring einwirken kann. Insbesondere ragt dabei das Beaufschlagungsteil 382 durch den Durchbruch 384 aus dem Kolbenführungsraum 362 heraus und der Bremsbelag 324 der Bremsbackeneinheit 314 ist an der Frontseite 354 des Beaufschlagungsteils 382 angeordnet, so dass bei einem Zurückversetzen des Beaufschlagungskolbens 352 in den Lösezustand der Beaufschlagungskolben 352 auch die Bremsbackeneinheit 314 mit ihrem Bremsbelag 324 zurückversetzt und dadurch der Bremsaufnahmeraum 316 vergrößert wird und somit der Bremsring freigegeben wird für eine freie, von den Bremsbackeneinheiten 312, 314 im Wesentlichen ungehinderte Rotation.

Die hydraulische Beaufschlagungsvorrichtung 216 umfasst die hydraulische Druckkammer 512, welche von dem Beaufschlagungskolben 352 und dem Gehäuse 302 größenvariabel begrenzt wird und vorzugsweise in dem bremsseitigen axialen Endbereich 372 des Kolbenführungsraums 362 gebildet wird. Über Fluidkanäle 516, ist die hydraulische Druckkammer 512 über den Hydraulikanschluss 518 fluidführend mit der Gebereinheit 222 verbunden, wobei die Ventilsteuerung 550 den Durchfluss des Hydraulikmediums steuert. Die Mündungsöffnung 538 eines Fluidkanals 516 mündet in die Druckkammer 512 auch bei einem im Bremszustand kleinstmöglichen Volumen der Drucckammer 512, welches diese in der Bremsendstellung des Beaufschlagungskolbens 352 einnimmt, frei in die Druckkammer 512 ein.

Wird durch ein Betätigen der Gebereinheit 222 durch diese druckbeaufschlagtes Hydraulikmedium in die Druckkammer 512 eingeführt, wirkt dieses der mechanischen Beaufschlagungsvorrichtung entgegen und der Beaufschlagungskolben 352 wird in eine Lösestellung versetzt, wodurch die an diesen gekoppelten Bremsbackeneinheiten 312, 314 in den Lösezustand der Bremsvorrichtung 212 versetzt werden. Dabei greift das druckbeaufschlagte Hydraulikmedium insbesondere an die zweite Beaufschlagungsfläche 522 des Beaufschlagungskolbens 352 an, wobei die zweite Beaufschlagungsfläche 522 an einer der ersten Beaufschlagungsfläche 412 gegenüberliegenden Seite des Beaufschlagungskolbens 352, insbesondere von dessen Führungsteils 364, ausgebildet ist und wobei die beiden Beaufschlagungsflächen 412, 522 einander abgewendet orientiert sind.

Die Ventilsteuerung 550 umfasst das Zuführventil 552, welches in einem Öffnungszustand den Zufluss von druckbeaufschlagtem Hydraulikmedium von der Gebereinheit 222 in die Druckkammer 512 freigibt und in einem Sperrzustand einen Durchfluss von Hydraulikmedium verhindert. Außerdem weist die Ventilsteuerung 550 das Freigabeventil 554 auf, welches in einem Schließzustand gegenüber in der Druckkammer 512 vorhandenem Hydraulikmedium fluiddichtend die Druckkammer 512 verschließt und in einem Freigabezustand einen Abfluss von Hydraulikmedium aus der hydraulischen Druckkammer freigibt. Ist somit das Zuführventil 552 in seinem Sperrzustand und das Freigabeventil 554 in seinem Schließzustand ist die hydraulische Druckkammer 512 fluiddichtend abgeschlossen und ein in dieser vorhandenes druckbeaufschlagtes Hydraulikmedium kann nicht entweichen. Ist somit genügend Hydraulikmedium in der Druckkammer 512 vorhanden, um den Beaufschlagungskolben 352 in die Lösestellung und damit die Bremsvorrichtung 212 in den Lösezustand zu versetzen, verharren der Beaufschlagungskolben 352 in der Lösestellung und die Bremsvorrichtung 212 in dem Lösezustand und somit ist die hydraulische Beaufschlagungsvorrichtung 216 als hydraulische Lösevorrichtung 218 ausgebildet. Wird das Freigabeventil 554 mittels der Freigabeeinrichtung 586 in deren Freigabezustand versetzt, gibt dieses einen Abfluss von dem druckbeaufschlagten Hydraulikmedium aus der Druckkammer 512 frei und insbesondere wird dieser Abfluss durch die Beaufschlagung der mechanischen Beaufschlagungsvorrichtung 214 in Richtung des Bremszustands verstärkt. Somit fließt bei der Freigabe des Freigabeventils 554 das Hydraulikmedium aus der Druckkammer 512 ab und der Beaufschlagungskolben 352 wird in die Bremsstellung und die Bremsvorrichtung 210 in den Bremszustand versetzt.

Vorzugsweise ist vorgesehen, dass das Zuführventil 552 und das Freigabeventil 554 gemeinsam durch das Rückschlagventil 558 ausgebildet werden, wobei das Rückschlagventil 558 ein federbeaufschlagtes, entsperrbares Rückschlagventil ist. Insbesondere durch die gemeinsame Ausbildung des Zuführventils 552 und des Freigabeventils 554 ist deren integrierte Anordnung in dem Gehäuse 302 auch bei dem geringen Bauraum welches dem Gehäuse 302 bei einem Rad 124, 134 eines Leichtgewichtfahrzeugs 112 zur Verfügung steht, ermöglicht.

Vorzugsweise ist noch vorgesehen, dass an dem Hydrauliksystem 224 der hydraulischen Beaufschlagungsvorrichtung 216 mit der Gebereinheit 222 auch eine hydraulisch betätigte Betriebsbremsenvorrichtung 244 angeschlossen ist, wobei der Fluss des Hydraulikmediums durch die Ventilsteuerung 550 gesteuert wird. Damit wird in günstiger Weise erreicht, dass mittels der einen Gebereinheit 222 sowohl die hydraulische Betriebsbremsenvorrichtung 244 als auch die hydraulische Beaufschlagungsvorrichtung 216 betätigt werden kann.

Bei einem zweiten Ausführungsbeispiel eines Bremssystems 100' sind diejenigen Elemente und Merkmale, welche zumindest im Wesentlichen gleich ausgebildet sind und/oder zumindest die gleiche grundlegende Funktion erfüllen wie bei dem ersten Ausführungsbeispiel, mit dem gleichen Bezugszeichen versehen und bezüglich der Beschreibung derselben wird vollinhaltlich auf die Ausführungen im Zusammenhang mit dem ersten Ausführungsbeispiel verwiesen. Insbesondere wenn auf eine abgewandelte Ausführung eines Merkmals oder Elements bei dem zweiten Ausführungsbeispiel besonders hingewiesen werden soll, ist das entsprechende Bezugszeichen mit einem Hochstrich versehen und sofern nachfolgend nichts abweichendes erläutert wird, ist auch ein solches Merkmal und Element vorzugsweise im Wesentlichen wie bei dem ersten Ausführungsbeispiel ausgebildet.

Das Bremssystem 100' umfasst ebenso eine Bremsvorrichtung 212, welche zusammen mit einer mechanischen Beaufschlagungsvorrichtung 214 eine Feststellbremsvorrichtung 210 ausbildet und eine hydraulische Beaufschlagungsvorrichtung 216 als hydraulische Lösevorrichtung 218 umfasst.

Insbesondere ist dabei ebenso ein in einem Kolbenführungsraum 362 eines Gehäuses 302 linear beweglich gelagerter Beaufschlagungskolben 352 zur Beaufschlagung der Bremsvorrichtung 212 vorgesehen, welcher in entgegengesetzte Richtungen von der mechanischen Beaufschlagungsvorrichtung 214 einerseits und von der hydraulischen Beaufschlagungsvorrichtung 216 andererseits beaufschlagt wird.

Bei diesem Ausführungsbeispiel ist jedoch vorgesehen, dass die Ventilsteuerung 550' im Wesentlichen außerhalb des Gehäuses 302 ausgebildet ist und insbesondere ein Wegeventil 712 umfasst. Insbesondere erfüllt dabei das Wegeventil 712 die Funktionen eines Zuführventils 552' und eines Freigabeventils 554'. Bei Varianten des Ausführungsbeispiels sind das Zuführventil und das Freigabeventil separate Ventile, wobei beide Ventile oder eines von diesen außerhalb des Gehäuses 302 angeordnet ist. Beispielsweise ist bei einer weiteren Variante des Ausführungsbeispiels vorgesehen, dass das Zuführventil und das Freigabeventil gemeinsam durch ein außerhalb des Gehäuses 302 ausgebildetes Rückschlagventil gebildet werden.

Das Wegeventil 712 umfasst eine Zuführleitung 722, welche fluidführend mit einer Gebereinheit 222 verbindbar und verbunden ist. Außerdem umfasst das Wegeventil 712 zwei Verbraucherleitungen 726, 728, welche an die Verbraucher des druckbeaufschlagten Hydraulikmediums, hier also an die hydraulische Beaufschlagungsvorrichtung 216 und eine hydraulisch betätigte Betriebsbremsenvorrichtung 244 anschließbar und angeschlossen sind. Somit ist das Wegeventil 712 insbesondere als drei-Wege-Ventil ausgebildet.

Außerdem umfasst das Wegeventil 712 einen Ventilkörper 732. Der Ventilkörper 732 weist eine erste und eine zweite Stellung auf. In der ersten Stellung verbindet der Ventilkörper 732 die Zuführleitung 722 mit der ersten Verbraucherleitung 726 fluidführend und dichtet die zweite Verbraucherleitung 728 ab. In der zweiten Stellung verbindet der Ventilkörper 732 die Zuführleitung 722 mit der zweiten Verbraucherleitung 728 fluidführend und dichtet die erste Verbraucherleitung 726 ab.

Beispielsweise ist der Ventilkörper 732 in einem Ventilraum 734 linear beweglich geführt angeordnet. Vorzugsweise ist der Ventilkörper 732 dabei federbeaufschlagt angeordnet und zwar beispielsweise in Richtung der ersten Stellung. Ferner ist eine Betätigungsvorrichtung 738 vorgesehen, mittels welcher der Ventilkörper 732 aus der ersten Stellung in die zweite Stellung versetzt werden kann und insbesondere wird durch die Beaufschlagung der Ventilkörper bei einem Ende der Betätigung der Betätigungsvorrichtung 738 wieder in die erste Stellung versetzt. Bei diesem Ausführungsbeispiel ist die Betätigungsvorrichtung 738 eine mechanische Betätigungsvorrichtung und beispielsweise ist der Ventilkörper 732 an einen Bowdenzug gekoppelt, welcher bei einer Betätigung desselben an dem Ventilkörper 732 zieht und diesen somit entgegen der Beaufschlagung in die zweite Stellung versetzt.

Beispielsweise weist der Ventilkörper 732 eine umfangseitig um diesen herumverlaufende Nut 742 auf. Dabei sind die Nut 742 und die Einmündung der Zuführleitung 722 in den Ventilraum 734 relativ zueinander so angeordnet, dass sowohl in der ersten Stellung als auch in der zweiten Stellung die Zuführleitung 722 und die Nut 742 fluidführend miteinander verbunden sind. Andererseits ist die Nut 742 derart angeordnet, dass in der ersten Stellung diese mit einer Einmündung der ersten Verbraucherleitung 726 in den Ventilraum 734 fluidführend verbunden ist und in der zweiten Stellung die Nut 742 mit einer Einmündung der zweiten Verbraucherleitung 728 in den Ventilraum 734 fluidführend verbunden ist. Andererseits ist in der ersten Stellung die Einmündung der zweiten Verbraucherleitung 728 durch den Ventilkörper 732 verschlossen und in der zweiten Stellung ist die Einmündung der ersten Verbraucherleitung 726 in den Ventilraum 734 durch den Ventilkörper 732 verschlossen.

Somit erfüllt der Ventilkörper 732 des zweiten Ausführungsbeispiels im Wesentlichen die Funktionen des Ventilkörpers 572 und des Schließkörpers 574 des ersten Ausführungsbeispiels.

Insbesondere ist die hydraulische Beaufschlagungsvorrichtung 216, also insbesondere die hydraulische Druckkammer 256, fluidführend an der zweiten Verbraucherleitung 728 angeschlossen. Somit weist das Wegeventil 712 in der ersten Stellung den Sperrzustand des Zuführventils 552' und den Schließzustand des Freigabeventils 554' auf und in der zweiten Stellung den Öffnungszustand des Zuführventils 552' und den Freigabezustand des Freigabeventils 554' auf.

Bei einer Variante dieses Ausführungsbeispiels umfasst das Wegeventil 712' ebenso eine Zuführleitung 722 und zwei Verbraucherleitungen 726, 728, welche je nach Stellung eines Ventilkörpers 732, welcher in einem Ventilraum 734 angeordnet ist, fluidführend mit der Zuführleitung 722 verbunden sind oder abgedichtet sind.

Bei dieser Variante ist vorgesehen, dass eine Betätigungsvorrichtung 738" des Wegeventils 712 elektrisch betätigbar ist und beispielsweise ein elektrischer Aktuator den Ventilkörper 732 zwischen den Stellungen hin- und herbewegt.

Ansonsten ist diese Variante des Ausführungsbeispiels wie voranstehend erläutert ausgebildet, so dass auf die voranstehenden Ausführungen vollinhaltlich Bezug genommen wird.

Im Übrigen sind alle weiteren Elemente und Merkmale des zweiten Ausführungsbeispiels vorzugsweise zumindest im Wesentlichen gleich ausgebildet und/oder erfüllen zumindest eine grundlegend gleiche Funktion wie Elemente bei dem ersten Ausführungsbeispiel, so dass bezüglich der Beschreibung derselben vollinhaltlich auf die Ausführungen im Zusammenhang mit dem ersten Ausführungsbeispiel verwiesen wird.

## Patentansprüche

1. Bremssystem (100) für ein Fahrzeug (112), insbesondere ein Leichtgewichtfahrzeug, insbesondere ein Fahrrad, umfassend eine Bremsvorrichtung (212), eine mechanische Beaufschlagungsvorrichtung (214) und eine hydraulische Beaufschlagungsvorrichtung (216), wobei die mechanische Beaufschlagungsvorrichtung (214) und die Bremsvorrichtung (212) eine Feststellbremsvorrichtung (210) bilden und die hydraulische Beaufschlagungsvorrichtung (216) eine hydraulisch betätigbare Lösevorrichtung (218) für die Feststellbremsvorrichtung (210) ausbildet,
wobei insbesondere das Bremssystem zumindest einen Bremszustand und mindestens eine Lösezustand aufweist, wobei in dem Bremszustand die Feststellbremsvorrichtung (210) bremswirksam ist und in dem Lösezustand inaktiv ist.

2. Bremssystem (100) nach Anspruch 1, **dadurch gekennzeichnet, dass** die mechanische Beaufschlagungsvorrichtung (214) ausgebildet ist und relativ zu der Bremsvorrichtung (212) angeordnet ist, dass eine Beaufschlagung durch die mechanische Beaufschlagungsvorrichtung (214) die Bremsvorrichtung (212) in den Bremszustand versetzt.

3. Bremssystem (100) nach Anspruch 1 oder 2, **dadurch gekennzeichnet, dass** die hydraulische Beaufschlagungsvorrichtung (216) ausgebildet ist und relativ zu der Bremsvorrichtung (212) angeordnet ist, dass eine Beaufschlagung durch die hydraulische Beaufschlagungsvorrichtung (216) die Bremsvorrichtung (212) in den Lösezustand versetzt.

4. Bremssystem (100) nach einem der voranstehenden Ansprüche,
**dadurch gekennzeichnet, dass** die Bremsvorrichtung (212) zwei Bremsbackeneinheiten (312, 314) umfasst, welche insbesondere in dem Bremszustand bremswirksam wirken, insbesondere mit einem Bremsring bremswirksam zusammenwirken,
wobei insbesondere zwischen den zwei Bremsbackeneinheiten (312, 314) diese einen Bremsaufnahmeraum (316) definieren, welcher insbesondere zur Aufnahme zumindest eines Abschnitts des Bremsrings vorgesehen ist, und wobei insbesondere der Bremsaufnahmeraum (316) in dem Bremszustand kleiner ist als in dem Lösezustand,
und/oder
dass dieses, insbesondere die Bremsvorrichtung (212), zumindest einen, insbesondere genau einen, Beaufschlagungskolben (352) umfasst, wobei insbesondere der Beaufschlagungskolben (352) bei einer Beaufschlagung desselben die Bremsvorrichtung (212) in einen anderen Zustand versetzt, insbesondere in Abhängigkeit einer Orientierung einer Beaufschlagungsrichtung in den mindestens einen Bremszustand und/oder in den mindestens einen Lösezustand versetzt, wobei insbesondere zumindest eine der Bremsbackeneinheiten (312, 314) beaufschlagungswirksam an dem Beaufschlagungskolben gekoppelt ist, insbesondere, dass zumindest in dem Bremszustand zumindest eine der Bremsbackeneinheiten (312, 314) von dem Beaufschlagungskolben (352) beaufschlagt wird,
wobei insbesondere der Beaufschlagungskolben (352) zumindest mit einem Beaufschlagungsteil (382) durch einen Durchbruch (384) des Gehäuses hindurchgreift und aus diesem herausragt und dass insbesondere mit dem aus dem Durchbruch (384) herausragenden Teil die zumindest eine Bremsbackeneinheit (312, 314) beaufschlagt.

5. Bremssystem (100) nach einem der voranstehenden Ansprüche,
**dadurch gekennzeichnet, dass** der Beaufschlagungskolben (352) einen vorderen axialen Anschlag (388) für eine Bremsendstellung umfasst, wobei insbesondere in der Bremsendstellung der vordere axiale Anschlag (388) mit einer insbesondere den Durchbruch (384) aufweisenden Gehäusewand (392) des Gehäuses (302) zusammenwirkt und wobei insbesondere ein zwischen dem Führungsteil (364) und dem Beaufschlagungsteil (382) angeordnetes Verbindungsteil (386) des Beaufschlagungskolbens (352) mit dem vorderen axialen Anschlag (388) versehen ist
und/oder
dass der Beaufschlagungskolben (352) einen hinteren axialen Anschlag (394) für eine Löseendstellung umfasst, wobei insbesondere der hintere axialen Anschlag (394) an einer dem Beaufschlagungsteil (382) gegenüberliegenden Seite des Beaufschlagungskolbens (352) angeordnet ist, und dass insbesondere der hintere axiale Anschlag (394) in der Löseendstellung mit einem Teil des Gehäuses (302) zusammenwirkt.

6. Bremssystem (100) nach einem der voranstehenden Ansprüche,
**dadurch gekennzeichnet, dass** die Bremsvorrichtung (212) eine Verschleißnachstelleinrichtung (332) für die zwei Bremsbackeneinheiten (312, 314) umfasst.

7. Bremssystem (100) nach einem der voranstehenden Ansprüche,
**dadurch gekennzeichnet, dass** die mechanische Beaufschlagungsvorrichtung (214), insbesondere ein Federelement (422) derselben, in dem Kolbenführungsraum (362) angeordnet ist,
wobei insbesondere die mechanische Beaufschlagungsvorrichtung (214), insbesondere deren Federelement (422), sich an dem Beaufschlagungskolben (352) abstützend angeordnet ist (412), und/oder
dass die mechanische Beaufschlagungsvorrichtung (212), insbesondere deren Federelement (422), unter Vorspannung die Bremsvorrichtung (212) beaufschlagend montiert ist.

8. Bremssystem (100) nach einem der voranstehenden Ansprüche,
**dadurch gekennzeichnet, dass** die hydraulische Beaufschlagungsvorrichtung (216) eine hydraulische Druckkammer (256) aufweist, wobei insbesondere der Kolbenführungsraum (362) die hydraulische Druckkammer (256) umfasst,
wobei insbesondere ein Volumen der hydraulischen Druckkammer (256) in dem Bremszustand kleiner ist als in dem Lösezustand, wobei insbesondere die hydraulische Druckkammer (256) sich entlang eines Abschnittsteils der zur Beaufschlagungsachse (306) axialen Erstreckung des Beaufschlagungskolbens (352) erstreckt, insbesondere zwischen zwei axial beabstandet an dem Beaufschlagungskolben (352) angeordneten Dichtungen erstreckt, wobei insbesondere die hydraulische Druckkammer (256) in einem axialen Endbereich (372) des Kolbenführungsraums (362) angeordnet ist, wobei insbesondere die den Durchbruch (384) aufweisende Gehäusewand zumindest teilweise die hydraulische Druckkammer (256) begrenzt,
wobei insbesondere eine Mündungsöffnung (538) eines Fluidkanals (516) in die hydraulische Druckkammer (256) mündet und insbesondere in ein der Bremsendstellung korrespondierendes Minimalvolumen der hydraulischen Druckkammer (256) mündet.

9. Bremssystem (100) für ein Fahrzeug (112), insbesondere ein Leichtgewichtfahrzeug, insbesondere ein Fahrrad, insbesondere nach einem der voranstehenden Ansprüche, mit einer hydraulischen Beaufschlagungsvorrichtung (216) für eine Bremsvorrichtung (212), welche eine hydraulische Druckkammer (256) und eine Ventilsteuerung (550) umfasst,
wobei insbesondere die hydraulische Beaufschlagungsvorrichtung (216) eine Gebereinheit (222) zur Bereitstellung von einem druckbeaufschlagtem Hydraulikmedium umfasst(550),
wobei insbesondere die Gebereinheit (222) einen Ausgleichsbehälter (228) mit einem Reservoir für Hydraulikmedium umfasst.

10. Bremssystem (100) nach einem der voranstehenden Ansprüche,
**dadurch gekennzeichnet, dass** die Ventilsteuerung (550) ein Zuführventil (552) umfasst, welches in einem Öffnungszustand einen Durchfluss von Hydraulikmedium in einer von einem Hydraulikanschluss (564), an welche eine Gebereinheit (222) anschließbar und/oder angeschlossen ist, zur hydraulischen Druckkammer (256) orientierten Freigaberichtung freigibt und welches insbesondere auch einen Sperrzustand aufweist, in welchem kein Durchfluss von Hydraulikmedium durch das Zuführventil (552) möglich ist,
wobei insbesondere das Zuführventil (552) einen Ventilkörper (572) und einen Ventilsitz (576) umfasst, und
wobei insbesondere der Ventilkörper (572) druckkammerseitig von dem Ventilsitz (576) angeordnet ist,
wobei insbesondere das Zuführventil (552) ein federbeaufschlagtes Ventil ist, wobei insbesondere der Ventilkörper (572) in Richtung seiner Sperrstellung federbeaufschlagt ist (568), wobei insbesondere eine Ventilfeder (568) derart ausgelegt ist, dass diese gegenüber über den Hydraulikanschluss (564) bereitgestelltes druckbeaufschlagtes Hydraulikmedium nachgibt, wobei insbesondere das Zuführventil (552) ein hydraulisch betätigtes Ventil ist, wobei insbesondere das Zuführventil (552) durch über den Hydraulikanschluss (564) bereitgestelltes druckbeaufschlagtes Hydraulikmedium in seinen Öffnungszustand versetzt wird.

11. Bremssystem (100) nach einem der voranstehenden Ansprüche,
**dadurch gekennzeichnet, dass** die Ventilsteuerung (550) ein Freigabeventil (554) umfasst, welches in einem Freigabezustand einen Durchfluss von Hydraulikmedium aus der hydraulischen Druckkammer (256) freigibt und welches insbesondere einen Schließzustand aufweist, in welchem das Freigabeventil (554) zumindest gegenüber in der hydraulischen Druckkammer (256) vorhandenem Hydraulikmedium fluidabdichtend schließend wirkt,
wobei insbesondere das Freigabeventil (554) einen Schließkörper (574) umfasst, welcher in dem Schließzustand eine Schließstellung einnimmt, in welcher er insbesondere mit einer Dichtung (582) fluidabdichtend wirkt.

12. Bremssystem (100) nach einem der voranstehenden Ansprüche,
**dadurch gekennzeichnet, dass** das Freigabeventil (554) mittels einer insbesondere mechanischen Freigabeeinrichtung (586) in den Freigabezustand versetzbar ist,
wobei insbesondere die Freigabeeinrichtung (586) in einer Betätigungsstellung das Freigabeventil (554) in den Freigabezustand versetzt, wobei insbesondere mittels eines Bowdenzuges die Freigabeeinrichtung (586) in die Betätigungsstellung versetzbar ist, wobei insbesondere die Freigabeeinrichtung (586) federbeaufschlagt ist, wobei insbesondere die Freigabeeinrichtung (586) durch die Federbeaufschlagung aus der Betätigungsstellung heraus versetzt, insbesondere in eine Grundstellung hineinversetzt, wird,
wobei insbesondere die Freigabeeinrichtung (586) ein Aktivierungselement (592) umfasst, mittels welchem in der Betätigungsstellung das Freigabeventil (554) in den Freigabezustand versetzt wird, wobei insbesondere die Grundstellung und die Betätigungsstellung der Freigabeeinrichtung (586) zu unterschiedlichen Winkelpositionen des Aktivierungselements (592) relativ zu einer Aktivierungsachse (594) korrespondieren, und wobei insbesondere eine Rotation des Aktivierungselements (592) um die Aktivierungsachse (594) den Übergang von der Grundstellung in die Betätigungsstellung bewirkt, wobei insbesondere die Freigabeeinrichtung (586) einen Stößel (624) umfasst und das Aktivierungselement (592) einen Verdrängerabschnitt (632) aufweist, wobei der Verdrängerabschnitt (632) bei einem Übergang von der Grundstellung in die Betätigungsstellung auf den Stößel (624) einwirkt,
wobei insbesondere der Stößel (624) durch eine Ventildurchführung (626) des Ventilsitzes (576) zumindest in der Betätigungsstellung hindurchgreift.

13. Bremssystem (100) nach einem der voranstehenden Ansprüche,
**dadurch gekennzeichnet, dass** die Ventilsteuerung (550) zumindest teilweise in dem Gehäuse (302) integriert ist, insbesondere, dass das Zuführventil (552) und/oder das Freigabeventil (554) und/oder ein Rückschlagventil (558) in dem Gehäuse (302) angeordnet ist/sind, wobei insbesondere das Gehäuse (302) einen Ventilraum (562) mit zumindest einem Ventil der Ventilsteuerung (550) aufweist, und insbesondere in dem Ventilraum (562) der Ventilkörper (572) und/oder der Schließkörper (574) und insbesondere die Ventilfeder (568) angeordnet sind,
wobei insbesondere das Aktivierungselement (592) in dem Gehäuse (302) zumindest im Wesentlichen angeordnet ist, insbesondere relativ zu dem Gehäuse (302) um die Aktivierungsachse (594) zumindest teilweise drehbar angeordnet ist,
wobei insbesondere das Aktivierungselement (592) zumindest teilweise, insbesondere mit der Aufnahme (622), in einem durch das Gehäuse (302) gebildeten Fluidkanal angeordnet ist und wobei insbesondere ein Verbindungskanal (578), welcher den Ventilraum (562) mit dem das Aktivierungselement (592) aufweisenden Fluidkanal fluidführend verbindet, die Ventildurchführung eines Ventils der Ventilsteuerung (550) ausbildet.

14. Bremssystem (100) nach einem der voranstehenden Ansprüche,
**dadurch gekennzeichnet, dass** dieses eine insbesondere hydraulische Betriebsbremse (242) umfasst, welche insbesondere mittels der Ventilsteuerung (550) mit einer Gebereinheit (222) fluidführend verbindbar ist und/oder mit der Gebereinheit (222) fluidführend verbunden ist
und/oder dass die Bremsvorrichtung (212), insbesondere deren Gehäuse (302), eine Justierungseinrichtung (670) umfasst zur Justierung derselben bei einer Montage an ein Fahrzeug (112).

15. Fahrzeug (112), insbesondere Leichtgewichtfahrzeug, insbesondere Fahrrad, umfassend ein Bremssystem (100) nach einem der voranstehenden Ansprüche.
